(19) Europäisches Patentamt
European Patent Office
Office européen des brevets

(11) **EP 4 117 849 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **21705880.9**

(22) Anmeldetag: **05.02.2021**

(51) Internationale Patentklassifikation (IPC):
**B23K 9/00** (2006.01)   **B23K 9/028** (2006.01)
**B23K 31/02** (2006.01)   **B23K 33/00** (2006.01)
**B23K 37/053** (2006.01)   **F28D 7/16** (2006.01)
**F28F 9/18** (2006.01)   **B23K 101/06** (2006.01)
**B23K 101/14** (2006.01)

(52) Gemeinsame Patentklassifikation (CPC):
**B23K 9/0026; B23K 9/0284; B23K 9/0288;**
**B23K 31/02; B23K 33/006; B23K 37/0533;**
**B23K 37/0536; F28D 7/16; F28F 9/18;**
B23K 2101/06; B23K 2101/14

(86) Internationale Anmeldenummer:
**PCT/EP2021/000014**

(87) Internationale Veröffentlichungsnummer:
**WO 2021/180355 (16.09.2021 Gazette 2021/37)**

(54) **HERSTELLUNGSVERFAHREN FÜR SCHWEISSVERBINDUNGEN ZWISCHEN INNENROHREN UND ROHRTRÄGERPLATTEN EINES ROHRBÜNDELS FÜR EINEN PRODUKT-ZU-PRODUKT-ROHRBÜNDEL-WÄRMEAUSTAUSCHER MITTELS EINER HILFSVORRICHTUNG UND HILFSVORRICHTUNG FÜR EIN SOLCHES HERSTELLUNGSVERFAHREN**

METHOD FOR PRODUCING WELDED CONNECTIONS BETWEEN INNER TUBES AND TUBE SUPPORT PLATES OF A TUBE BUNDLE FOR A PRODUCT-TO-PRODUCT SHELL-AND-TUBE HEAT EXCHANGER BY MEANS OF AN AUXILIARY DEVICE, AND AUXILIARY DEVICE FOR A PRODUCTION METHOD OF THIS TYPE

PROCÉDÉ DE PRODUCTION DE JOINTS SOUDÉS ENTRE DES TUBES INTERNES ET DES PLAQUES PORTE-TUBE D'UN FAISCEAU TUBULAIRE POUR UN ÉCHANGEUR DE CHALEUR À FAISCEAU TUBULAIRE DE TYPE PRODUIT À PRODUIT AU MOYEN D'UN DISPOSITIF AUXILIAIRE, ET DISPOSITIF AUXILIAIRE CONÇU POUR UN TEL PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2020 DE 102020001599**

(43) Veröffentlichungstag der Anmeldung:
**18.01.2023 Patentblatt 2023/03**

(73) Patentinhaber: **GEA TDS GmbH**
**31157 Sarstedt (DE)**

(72) Erfinder:
• **WINKING, Kevin**
  **48703 Stadtlohn (DE)**

• **HILLER, Carsten**
  **48683 Ahaus (DE)**
• **JÄCKERING, Wolfgang**
  **48488 Emsbüren-Berge (DE)**
• **SPEEMANN, Ralf**
  **48341 Altenberge (DE)**
• **SCHMIED, Andreas**
  **48249 Dülmen (DE)**
• **TACKE, Ludger**
  **46342 Velen (DE)**

(74) Vertreter: **Hauck Patentanwaltspartnerschaft mbB**
**Postfach 11 31 53**
**20431 Hamburg (DE)**

EP 4 117 849 B1

(56) Entgegenhaltungen:
**DE-A1- 2 341 808      DE-A1-102011 111 095**
**FR-A1- 2 349 395      US-A- 2 996 600**
**US-A1- 2015 267 973**

**Beschreibung**

TECHNISCHES GEBIET

Die Erfindung betrifft ein Herstellungsverfahren für Schweißverbindungen zwischen Innenrohren und Rohrträgerplatten eines Rohrbündels für einen Produkt-zu-Produkt-Rohrbündel-Wärmeaustauscher mittels einer Hilfsvorrichtung (siehe Anspruch 1), wobei die jeweilige Rohrträgerplatte mit ihrer den Innenrohren zugewandten Stirnseite verschweißt wird. Das Herstellungsverfahren wird in an sich bekannter Weise mit folgenden Schritten durchgeführt: (i) Ausrichten der Innenrohre mit zugeordneten, in der Rohrträgerplatte angeordneten plattenseitigen Innenbohrungen derart, dass die Innenrohre und die plattenseitigen Innenbohrungen miteinander fluchten; (ii) Festlegen des jeweiligen Innenrohres und der Rohrträgerplatte zueinander in einer unverschweißten Ausgangslage mit einem Formschluss, der radial und gegeneinander gerichtet wirksam ist, wobei mehr als eine plattenseitige Innenbohrung vorgegeben und damit ein Rohrbelegungsmuster durch die Rohrträgerplatte festlegt wird für zugeordnete, parallel zueinander angeordnete Innenrohre; (iii) unverrückbares Festlegen einer jeweils notwendigen Anzahl Innenrohre in Gänze entsprechend dem Rohrbelegungsmuster zueinander und im jeweiligen Formschluss mit der Rohrträgerplatte mittels der Hilfsvorrichtung.

Die Erfindung betrifft weiterhin eine Hilfsvorrichtung für ein solches Herstellungsverfahren, ein mit einem solchen Herstellungsverfahren geschweißtes Rohrbündel und einen Produkt-zu-Produkt-Rohrbündel-Wärmeaustauscher mit wenigstens einem solchen Rohrbündel, siehe Ansprüche 3, 8 und 11.

STAND DER TECHNIK

In der Nahrungsmittel- und Getränkeindustrie kommen die verschiedensten Arten von Wärmeaustauschern zur Anwendung, mit denen Lebensmittelprodukte wärmebehandelt werden. Die jeweilige Auswahl, beispielsweise Platten- oder Rohrwärmeaustauscher in ihren unterschiedlichsten Ausführungsformen, richtet sich nach dem zu behandelnden Lebensmittelprodukt. Der Rohrwärmeaustauscher ist sowohl für niedrigviskose Produkte wie Milch und andere Milchprodukte, Getränke und Säfte als auch für mittel- bis hochviskose Produkte wie Konzentrate, Suppen oder Desserts und darüber hinaus auch für derartige Produkte, die zusätzlich Fasern und/oder Pulpe beinhalten, geeignet. In der Regel strömt das Produkt zum Zwecke der Wärmebehandlung durch die sogenannten Innenrohre und ein Wärmeträgermedium, beispielsweise Dampf oder Wasser, umströmt diese Innenrohre, vorzugsweise im Gegenstrom, von außen in einem die Innenrohre umgebenden Gehäuse, vorzugsweise einem Mantelrohr.

Eine besonders energieeffiziente Ausführungsform der bekannten Rohrwärmeaustauscher ist ein sogenannter Rohrbündel-Wärmeaustauscher (siehe **Figur 1**). Dieser besteht aus einer Vielzahl von Rohrbündeln (**Figuren 2a, 2b, 3**), von denen jedes mehrere parallel geschaltete Innenrohre mit einem gemeinsamen Eintritt und einem gemeinsamen Austritt für das Produkt aufweist. Die jeweilige Gruppe von Innenrohren bzw. ein sogenannter Satz Innenrohre wird von dem Mantelrohr umschlossen, das jeweils nahe seiner Enden mit einem in dieses Mantelrohr radial ein- bzw. ausmündenden Anschlussstutzen für ein Wärmeträgermedium versehen ist. Das Wärmeträgermedium durchströmt das Mantelrohr vorzugsweise im Gegenstrom zur Rohrströmung in den Innenrohren, einem Produktstrom.

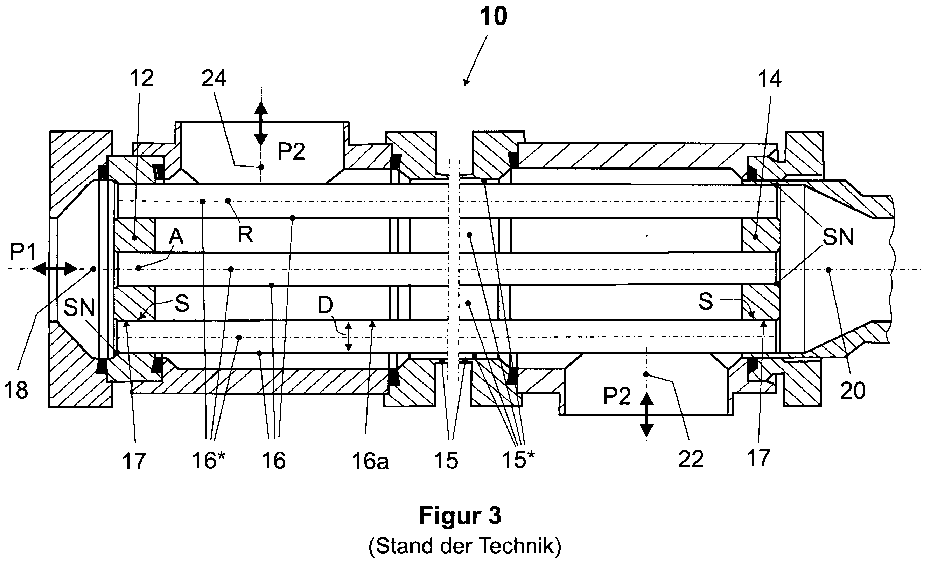

Die Innenrohre durchdringen beiderseits und jeweils endseitig eine plattenseitige Innenbohrung in einer sogenannten Rohrträgerplatte (**Figur 3**) und sind jeweils an ihrem Rohrende mit der Rohrträgerplatte, und zwar an deren den Innenrohren abgewandten Stirnseite (Vorderseite der Rohrträgerplatte), vorzugsweise mittels einer umlaufenden Rundschweißnaht, verbunden. Anstelle einer Schweißverbindung sind auch andere stoffschlüssige Verbindungen mit oder ohne Zusatzmaterial möglich. Es liegt somit zwischen der Außenseite des Innenrohres und der zugeordneten plattenseitigen Innenbohrung in der Rohrträgerplatte ein umlaufender Ringspalt vor, der sich von der umlaufenden, stoffschlüssigen Verbindungsstelle zwischen Innenrohr und Rohrträgerplatte durch die Rohrträgerplatte hindurch bis in einen vom Wärmeträgermedium beaufschlagten Innenraum für das Rohrbündel bzw. des Mantelrohres erstreckt. Dieser umlaufende Ringspalt ist so lange unkritisch, wie das Wärmeträgermedium nur ausschließlich ein Wärmeträgermedium wie Wasser oder Dampf bleibt und nicht durch ein Lebensmittelprodukt substituiert wird.

Wenn allerdings aus Gründen einer verbesserten Wärmeübertragungseffizienz in einem Rohrbündel-Wärmeaustauscher eine sogenannte Produkt-zu-Produkt-Wärmeübertragung stattfinden soll, dann wird der vorgenannte umlaufende Ringspalt kritisch, weil sich hier Produkt festsetzen kann. Im günstigsten Falle kann dieses Produkt nur durch besonders intensive und langandauernde überdosierte Reinigung im Durchfluss, sogenannte CIP-Reinigung (CIP: cleaning in place), abgereinigt werden, mit dem Ziel einer Überführung des umlaufenden Ringspalts in einen mikrobiologisch unkritischen Zustand für die nachfolgende Produktfahrt.

Besonders bei regenerativ betriebenen Wärmeübertragungssystemen, bei denen beispielsweise die bei der Abkühlung eines Endprodukts anfallende Wärme zur Vorwärmung eines noch zu behandelnden Produkts genutzt wird, ergibt sich bekanntlich bei einer Wärmeübertragung von Produkt-zu-Produkt (P-P) gegenüber einer Wärmeübertragung von Produkt-zu-Wärmeträgermedium-zu-Produkt (P-W-P) eine höhere Energieeffizienz bzw. Wirtschaftlichkeit, weil der Wärmedurchgang durch eine größere logarithmische Temperaturdifferenz sowie eine höhere Strömungsgeschwindigkeiten der Produktströme (höhere Reynolds-Zahl) verbessert und die Wärmeaustauschflächen dadurch verkleinert werden können. Durch die höheren Reynolds-Zahlen lassen sich darüber hinaus Rohrbündel mit größeren Rohrlängen realisieren, wodurch sich Kostensenkungen ergeben.

In der bekannten Form sind die Rohrbündel-Wärmeaustauscher unter sanitären oder gar aseptischen Gesichtspunkten nur um den Preis einer überdosierten Reinigung für einen Produkt-zu-Produkt-Wärmeaustausch geeignet. Es wurde daher vorgeschlagen (JP 2020 117 121), an der Rückseite der Rohrträgerplatte, das heißt an der den Innenrohren zugewandten Stirnseite der Rohrträgerplatte, eine zusätzliche Rundnahtschweißung vorzunehmen, um den kritischen Ringspalt dadurch gegen das Eindringen von Produkt zu schließen. Ein Nachteil einer jeweiligen umlaufenden Rundschweißnaht an der Vorder- und zusätzlich an der Rückseite der Rohrträgerplatte besteht darin, dass zwischen den beiden Rundschweißnähten bzw. den beiden anderweitigen stoffschlüssigen Verbindungen ein geschlossener Ringraum bzw. Ringspalt gebildet wird, der ein Risiko für die Lebensmittelsicherheit darstellt, wenn die Rundschweißnähte bzw. stoffschlüssigen Verbindungen nicht fehler- und porenfrei hergestellt sind. Eine diesbezügliche Überprüfung ist nur schwer oder überhaupt nicht möglich. Es besteht dann die Gefahr, dass sich in dem geschlossenen Ringraum Mikroorganismen ansiedeln, die ein nachfolgendes Produkt rekontaminieren können.

Aus der DE 23 41 808 A1 (offenbarend Merkmale und Schritte der Oberbegriffe der Ansprüche 1, 3, 8 und 11) ist ein Wärmetauscher mit gegenüberliegenden Kopfplatten mit Löchern bekannt, wobei die Löcher zugeordnete Innenrohre deckungsgleich miteinander verbinden. Der Durchmesser des Innenrohres ist mit dem Durchmesser der jeweiligen Kopfplatten gleich. Die Kopfplatte ist im Umfangsbereich des Loches und zum Innenrohr hin in Form eines Vorsprunges ausgebildet. Vorsprung und Innenrohr werden über eine Stumpfschweißung über die gesamte Wandstärke des Innenrohes miteinander verbunden, wobei die Stumpfschweißung als orbitale Schweißung von der Innenseite des Innenrohres ausgeführt ist. Die Festlegung des Innenrohres gegenüber der Kopfplatte im Verlauf des Schweißvorganges erfolgt über geeignete Haltemittel.

In der US 2 996 600 A ist im Rahmen eines Rohrwärmeaustauschers eine Schweißverbindung zwischen einem Rohr und einer Rohrträgerplatte beschrieben. Das Rohr besitzt einen Innendurchmesser, dem der Durchmesser einer dem Rohr zugeordneten Bohrung in der Rohrträgerplatte entspricht. Rohr und Rohrträgerplatte werden derart miteinander verschweißt, dass der Innendurchmesser des Rohres und der Durchmesser der Bohrung miteinander fluchten. Die diesbezüglich notwendige Ausrichtung und Zentrierung des Rohres an der Rohrträgerplatte wird durch einen Rezess an der Rohrträgerplatte, in den das Rohr eingreift, erreicht. Eine Umkehrung dieses Prinzips wird ebenfalls offenbart, bei dem ein Rezess am zu verbindenden Rohrende vorgesehen ist, der eine die Bohrung in der Rohrträgerplatte umgebende Aushalsung von außen umschließt. Der jeweilige Formschlussbereich zwischen dem Rohr und der Rohrträgerplatte wird mittels eines orbital umlaufenden Schweißwerkzeuges, ausgehend von der Innenseite des Innendurchmessers des Rohres sowie der Bohrung der Rohrträgerplatte, einlagig und durchgängig von radial innen bis radial außen verschweißt.

Aus der FR 2 349 395 A ist eine Vorrichtung zur Befestigung eines Rohres in einem Rohrboden durch das sogenannte Innenbohrungsschweißen bekannt, wobei das Rohr über einen bestimmten Abstand in eine Bohrung in dem Rohrboden gesteckt wird und innerhalb der Bohrung und des Rohres eine Schweißelektrode gesteckt wird, die in Bezug auf den Rand des Rohres und auf die Bohrung eine relative Drehbewegung vollführt. Es ergibt sich eine Schweißnaht, die die gesamte Wandstärke des Rohres mit einem dem Rohr zugewandten Eckenbereich des massiven Rohrbodens verbindet.

In der WO 2014 060 425 A1 bzw. der US 2015/267 973 A1 werden die unterschiedlichsten Vorschläge offenbart, wie die in Rede stehende Verbindung zwischen einem Innenrohr und einer Rohrträgerplatte eines Rohrbündels eines Rohrbündel-Wärmeaustauschers unter Vermeidung eines umlaufenden Ringspalts zwischen der Außenseite des Innenrohres und der Bohrung in der Rohrträgerplatte ausgestaltet werden kann.

In der DE 15 01 463 A wird eine Vorrichtung zum horizontalen Zusammenbau von Wärmeaustauschern offenbart, bei der ein durch Halterungen zusammengehaltenes Rohrbündel, dessen Rohre mit ihren Rohrenden in zugeordnete Bohrungen eines Rohrbodens einmünden, in einen beiderseits offenen Mantel des Wärmeaustauschers eingeführt werden. Die Halterungen verbleiben offensichtlich am und im Rohrbündel, auch nach dem Zusammenbau und im Betrieb des Wärmeaustauschers.

Merkmale für die Einbettung der Rohre des Rohrbündels im Rohrboden und die Verbindung (beispielsweise Schweißverbindungen) mit diesem sind nicht offenbart. Es kann vermutet werden, dass die einzelnen Rohre des Rohrbündels durch zugeordnete Bohrungen im Rohrboden hindurchgeschoben und an den offenen Rohrenden mit der Stirnseite des Rohrbodens, die den Rohren abgewandt ist, stoffschlüssig verbunden, vermutlich verschweißt sind. Diesbezügliche Schweißverbindungen zeitigen, wie vorstehend bereits thematisiert, einen kritischen Ringspalt zwischen dem Außendurchmesser des jeweiligen Rohres und dem Innendurchmesser der aufnehmenden Bohrung im Rohrboden.

Die vorstehend angegebenen Merkmale aus dem Stand der Technik sind im Kontext zu der Ausgestaltung einer Schweißverbindung zwischen Innenrohr und Rohrträgerplatte (US 2 996 600 A) sowie zu einer Halterung bzw. Hilfsvorrichtung, mit der die Rohre eines Rohrbündels zusammengehalten werden (DE 15 01 463 A), in Kombination miteinander gattungsbildend für den Gegenstand der vorliegenden Erfindung.

Ausgehend von dem vorgenannten Stand der Technik ist es Aufgabe der vorliegenden Erfindung, ein Herstellungsverfahren der gattungsgemäßen Art zu schaffen, das mittels einer Hilfsvorrichtung eine unter hygienischen und sanitären Gesichtspunkten sichere, maßgenaue und mit hoher reproduzierbarer Qualität ausgeführte Schweißverbindung zwischen den Innenrohen und der Rohrträgerplatte eines Rohrbündels für einen Produkt-zu-Produkt-Rohrbündel-Wärmeaustauscher sicherstellt. Darüber hinaus ist es Ziel der Erfindung, eine Hilfsvorrichtung zur Durchführung des erfindungsgemäßen Herstellungsverfahrens anzugeben.

ZUSAMMENFASSUNG DER ERFINDUNG

Diese Aufgabe wird durch ein Herstellungsverfahren mit den Merkmalen des Anspruchs 1 gelöst. Eine vorteilhafte Ausgestaltung des erfindungsgemäßen Herstellungsverfahrens ist Gegenstand des zugeordneten Unteranspruchs. Eine erfindungsgemäße Hilfsvorrichtung für ein solches Herstellungsverfahrens ist Gegenstand des nebengeordneten Anspruchs 3. Vorteilhafte Ausführungsformen der Hilfsvorrichtung sind in den zugeordneten Unteransprüchen beschrieben. Ein erfindungsgemäßes Rohrbündel ist Gegenstand des Nebenanspruches 8. Vorteilhafte Ausgestaltungen des Rohrbündels sind in den zugeordneten Unteransprüchen beansprucht. Ein erfindungsgemäßer Produkt-zu-Produkt-Rohrbündel-Wärmeaustauscher mit wenigstens einem solchen Rohrbündel ist Gegenstand des Nebenanspruchs 11.

Die Erfindung geht verfahrenstechnisch aus von einem Herstellungsverfahren für Schweißverbindungen zwischen Innenrohren und Rohrträgerplatten eines Rohrbündels für einen Produkt-zu-Produkt-Rohrbündel-Wärmeaustauscher mittels einer Hilfsvorrichtung, wobei die jeweilige Rohrträgerplatte mit ihrer den Innenrohren zugewandten Stirnseite verschweißt wird, durchgeführt mit folgenden an sich bekannten Schritten (i) bis (iii):

(i) Ausrichten der Innenrohre mit zugeordneten, in der Rohrträgerplatte angeordneten plattenseitigen Innenbohrungen derart, dass die Innenrohre und die plattenseitigen Innenbohrungen miteinander fluchten, d.h. ihre Rotationsachsen verlaufen koaxial.

(ii) Festlegen des jeweiligen Innenrohres und der Rohrträgerplatte zueinander in einer unverschweißten Ausgangslage mit einem Formschluss, der radial und gegeneinander gerichtet wirksam ist, wobei mehr als eine plattenseitige Innenbohrung vorgegeben und damit ein Rohrbelegungsmuster durch die Rohrträgerplatte festlegt wird für zugeordnete, parallel zueinander angeordnete Innenrohre.

Die radiale Festlegung wirkt in beiden Richtungen, die axiale Festlegung beschränkt sich darauf, dass das Innenrohr an der Rohrträgerplatte in der einen Richtung anliegt und in der umgekehrten Richtung von dieser gelöst werden kann.

(iii) Unverrückbares Festlegen einer jeweils notwendigen Anzahl n Innenrohre in Gänze entsprechend dem Rohrbelegungsmuster zueinander und im jeweiligen Formschluss mit der Rohrträgerplatte mittels der Hilfsvorrichtung.

Die Rohrträgerplatte legt durch die Vorgabe von mehr als einer Innenbohrung ein Rohrbelegungsmuster fest für die Anordnung zugeordneter, parallel zueinander angeordneter Innenrohre. Die Anzahl n der möglichen Innenrohre beträgt zwei und mehr, wobei eine Anordnung mit n = 7 Innenrohren bevorzugt ist, von denen eines zentral in der Rohrträgerplatte und die anderen gleichverteilt auf einem einzigen Teilkreis angeordnet sind, der konzentrisch zum Zentrum der Rohrträgerplatte verläuft. Die Hilfsvorrichtung dient der unverrückbaren Festlegung der Innenrohre zueinander.

Der erfinderische Grundgedanke besteht bei dem erfindungsgemäßen Herstellungsverfahren darin, im Sinne der Aufgabenstellung eine Lösung nicht nur für ein einzelnes Innenrohr, wie dies im Stand der Technik offenbart ist, vorzusehen, sondern eine Lösung für eine Gruppe bzw. einen Satz von parallel zueinander verlaufenden Innenrohren in einem fortlaufenden Schweißprozess vorzuschlagen, der alle Innenrohre des Satzes nacheinander erfasst.

Die der Erfindung zugrundeliegende Aufgabe wird nach dem Herstellungsverfahren durch die folgenden weiteren Schritte (iv) bis (viii) gelöst.

(iv) Anpressen der Stirnseite der Rohrträgerplatte in Richtung der Innenrohrlängsachsen der Innenrohre an die Stirnseite der Innenrohre über die Zeitdauer der Schweißungen für alle Innenrohre mit einem ersten Formschluss, der radial sowie axial und jeweils gegeneinander gerichtet wirksam ist, wobei die plattenseitige Innenbohrung und eine rohrseitige Innenbohrung des Innenrohres gleichgroße Innendurchmesser aufweisen. Durch das Anpressen werden unerwünschte Spaltbildungen zwischen den Stirnseiten der Innenrohre und der Rohrträgerplatte, die durch den Wärmeeintrag beim Schweißen verursacht werden können, vermieden bzw. minimiert.

(v) Unverrückbares Festlegen der jeweils notwendigen Anzahl n Innenrohre in Gänze entsprechend dem Rohrbelegungsmuster zueinander mittels eines zweiten Formschlusses der Hilfsvorrichtung, der lösbar ausgestaltet ist. Der zweite Formschluss verzichtet vorzugsweise auf eine kraftschlüssige Komponente, wobei diese Ausgestaltung auch ein gegebenenfalls vorhandenes zentrales Innenrohr umfasst.

(vi) Ausführen einer umlaufenden Rundschweißnaht orbital, von der plattenseitigen und der rohrseitigen Innenbohrung ausgehend, einlagig und von radial innen bis radial außen durchgängig, wobei von einer Schweißnahtbreite der umlaufenden Rundschweißnaht mindestens eine axiale Formschlusstiefe des ersten Formschlusses erfasst wird. Die Schweißung erfolgt vorzugsweise ohne Zusatzmaterial und unter einer für die zu verbindenden Materialien geeigneten Schutzgasatmosphäre. Die axiale Formschlusstiefe ist auf eine sich unter den gegebenen Schweiß- und Wandstärkenbedingungen ergebende Schweißnahtbreite abgestimmt. Die axiale Formschlusstiefe darf eine mögliche Schweißnahtbreite nicht überschreiten. Unter umlaufender Rundschweißnaht ist eine Schweißnaht zu verstehen, die in sich geschlossen, d.h. ohne örtliche Unterbrechungen ausgeführt ist.

(vii) Verschweißen der Innenrohre mit der Rohrträgerplatte nacheinander.

In der einmal eingenommenen Anordnungslage der Innenrohre, die durch die Hilfsvorrichtung unverrückbar festgelegt ist, werden alle diesbezüglichen Schweißverbindungen ausgeführt.

(viii) Lösen und Entfernen der Hilfsvorrichtung von der verschweißten Rohranordnung.

Um Materialspannungen im Verlauf des über alle Schweißverbindungen währenden Schweißprozesses zu minimieren, ist eine Schweißabfolge so vorgesehen, dass, falls vorhanden, zunächst ein zentral in der Rohrträgerplatte angeordnetes Innenrohr und anschließend die auf einem Teilkreis um das zentrale Innenrohr herum angeordneten außenliegenden Innenrohre, jeweils in gegenüberliegender Abfolge, mit der Rohrträgerplatte verschweißt werden.

Die Erfindung geht vorrichtungstechnisch aus von einer Hilfsvorrichtung für ein Herstellungsverfahren für Schweißverbindungen zwischen Innenrohren und Rohrträgerplatten eines Rohrbündels für einen Produkt-zu-Produkt-Rohrbündel-Wärmeaustauscher, wobei die Schweißverbindung in an sich bekannter Weise folgendermaßen ausgestaltet ist:

- Das Innenrohr mit seiner rohrseitigen Innenbohrung ist in einer Ebene senkrecht zu einer Innenrohrlängsachse mit einer den Innenrohren zugewandten Stirnseite der scheibenförmigen Rohrträgerplatte, die eine plattenseitige Innenbohrung aufweist, verbunden.
- Die rohrseitige Innenbohrung und die plattenseitige Innenbohrung weisen gleichgroße Innendurchmesser auf und sind miteinander fluchtend ausgerichtet.
- In einer unverschweißten Ausgangslage sind das Innenrohr und die Rohrträgerplatte mit einem ersten Formschluss, der radial sowie axial und jeweils gegeneinander gerichtet wirksam ist, zueinander festgelegt.
- Eine umlaufende Rundschweißnaht ist orbital, von der rohrseitigen Innenbohrung ausgehend, einlagig und von radial innen bis radial außen durchgängig ausgeführt.

- Eine Schweißnahtbreite der umlaufenden Rundschweißnaht erfasst mindestens eine axiale Formschlusstiefe des ersten Formschlusses.

Die der Erfindung zugrundeliegende Aufgabe wird mit einer erfindungsgemäßen Hilfsvorrichtung für das erfindungsgemäße Herstellungsverfahren durch die folgenden Merkmale gelöst.

- Es sind im Rahmen der Hilfsvorrichtung eine erste und eine zweite Halteringhälfte vorgesehen, die einen geschlossenen Ring bilden.
- Die Halteringhälften berühren sich in einer Trennebene, die durch ein Zentrum der Hilfsvorrichtung verläuft, und in der Trennebene bilden die Halteringhälften einen unverschieblichen zweiten Formschluss miteinander.
- Die Rohrträgerplatte legt durch die Vorgabe von mehr als einer in ihr vorgesehenen Innenbohrung ein Rohrbelegungsmuster fest für die Anordnung parallel zueinander angeordneter Innenrohre.
- Das Rohrbelegungsmuster ist in den Halteringhälften derart abgebildet, dass auf einem einzigen Teilkreis gleichverteilt angeordnete Innenrohre jeweils maximal halbseitig von den Halteringhälften umschlossen sind, wobei die Öffnung der jeweils umschließenden Kontur dem Zentrum der Halteringhälften zugewandt ist. Diese Bedingungen werden durch entsprechende Bemessung eines Innendurchmessers der zu einem Ring geschlossenen Halteringhälften erfüllt, wobei die Bemessung von der Anzahl der auf dem Teilkreis befindlichen Innenrohre abhängt.
- Die Trennebene verläuft zusätzlich durch mindestens eine auf dem Teilkreis liegende Innenrohrlängsachse. Dadurch ist sichergestellt, dass die Halteringhälften sämtliche Innenrohre umschließen und in Gänze festlegen können und dass nach dem Verschweißen aller Innenrohre mit der Rohrträgerplatte ein Lösen und Entfernen der Halteringhälften von der verschweißten Rohranordnung möglich ist.
- Es sind Haltemittel vorgesehen, die jeweils am Umfang der Halteringhälften und sternförmig zum Zentrum hin orientiert in die Halteringhälften verschieblich eingreifen.
- Die Haltemittel tangieren beiderseits mit ihrer Mantelfläche jeweils auf dem Teilkreis angeordnete, benachbarte Innenrohre.
- Die Haltemittel legen mit ihrer jeweiligen dem Zentrum zugewandten Stirnseite erforderlichenfalls ein im Zentrum angeordnetes Innenrohr fest und sind in dieser Position selbst jeweils lösbar festgelegt.

Eine entsprechend den vorstehenden Merkmalen ausgestaltete erfindungsgemäße Hilfsvorrichtung ist geeignet, Rohranordnungen mit wenigstens zwei Innenrohren in sich bestimmungsgemäß aufzunehmen.

Es ist hinreichend, wenn der zweite Formschluss die erste und die zweite Halteringhälfte in radialer Richtung zueinander festlegt. Die Festlegung der Halteringhälften in axialer Richtung zueinander erfolgt zweckmäßig dadurch, wie dies vorgesehen ist, dass die erste und die zweite Halteringhälfte durch ein am Umfang der ersten und der zweiten Halteringhälfte angeordnetes Verbindungsmittel, beispielsweise eine Verbindungsschraube, die diametral zueinander angeordnet sind, lösbar miteinander verbunden sind.

Befindet sich die Hilfsvorrichtung in der geschlossenen Position und legt sie in dieser Position eine bestimmungsgemäße Anzahl von Innenrohren fest, damit diese mit der zugeordneten Rohrträgerplatte gemäß dem erfindungsgemäßen Herstellungsverfahren verschweißt werden können, dann sind die Haltemittel, die die Innenrohre im zweiten Formschluss festlegen, jeweils durch ein Feststellmittel, beispielsweise eine Feststellschraube, in der zugeordneten Halteringhälfte selbst unverrückbar festgelegt.

Ein besonders vorteilhaftes Rohrbelegungsmuster zeichnet sich dadurch aus, dass sieben Innenrohre vorgesehen sind, wobei sich ein Innenrohr koaxial im Zentrum der Hilfsvorrichtung befindet und sechs Innenrohre gleichverteilt auf dem Teilkreis angeordnet sind und dass die Trennebene zusätzlich durch zwei diametral zueinander angeordnete Innenrohre verläuft. In dieser Anordnung bilden die Innenrohrlängsachsen jeweils dreier benachbarter Innenrohre die Ecken eines gleichseitigen Dreiecks, wodurch der radiale Abstand aller jeweils benachbarten Innenrohre gleichgroß ist, da im Regelfall alle Innenrohre einen gleichgroßen Außendurchmesser aufweisen. Die Wärmeübertragungs- und Wärmedurchgangsbedingungen sind unter diesen Randbedingungen für alle Innenrohre annähernd gleich, wenn man von den besonderen Umströmungsbedingungen des zentralen Innenrohres gegenüber den auf dem Teilkreis befindlichen anderen Innenrohren absieht.

Eine Verlagerung der umlaufenden Rundschweißnaht teilweise oder vollständig in die Rohrträgerplatte hinein zeitigt in an sich bekannter Weise einen unstetigen Verlauf der Verbindungsquerschnitte vom relativ kleinen Verbindungsquerschnitt des Innenrohres zum massiven Querschnitt der Rohrträgerplatte. Ein derartiger Verlauf ist festigkeitsmäßig ungünstig.

Mit dem erfindungsgemäßen Herstellungsverfahren und der erfindungsgemäßen Hilfsvorrichtung für Schweißverbindungen zwischen Innenrohren und Rohrträgerplatten ist die Herstellung eines Rohrbündels, das aus einer Vielzahl von Innenrohren besteht, für einen Produkt-zu-Produkt-Rohrbündel-Wärmeaustauscher gemäß der erfindungsgemäßen Aufgabenstellung möglich und es kann auch der vorstehend thematisierte ungünstige Querschnittsverlauf vermieden werden. Dies gelingt dadurch, dass die Schweißverbindung als eine umlaufende Rundschweißnaht ausgeführt ist und die Rohrträgerplatte, radial außenseits von der umlaufenden Rundschweißnaht beabstandet, eine umlaufende, axial sich erstreckende, ringspaltförmige plattenseitige Ausnehmung aufweist, die so ausgebildet ist, dass die mit der umlaufenden Rundschweißnaht zu verschweißende Wandstärke der Rohrträgerplatte einen Wert annimmt, der zwischen der einfachen bis zur zweifachen Rohrwandstärke liegt.

Die vorliegende Erfindung sieht vor, dass das Herstellungsverfahren für Schweißverbindungen zwischen Innenrohren und Rohrträgerplatten mit einer erfindungsgemäßen Hilfsvorrichtung mit ihren vorgeschlagenen Ausführungsformen durchgeführt wird.

Das erfindungsgemäße Herstellungsverfahren und die erfindungsgemäße Hilfsvorrichtung basieren auf der erfindungsgemäßen Schweißverbindung zwischen Innenrohren und Rohrträgerplatten des Rohrbündels für einen Produkt-zu-Produkt-Rohrbündel-Wärmeaustauscher. Diese Schweißverbindung stellt sicher, dass der vorstehend thematisierte und unter hygienischen und sanitären Gesichtspunkten kritische umlaufende Ringspalt zwischen Außendurchmesser des Innenrohres und dem Innendurchmesser der zugeordneten plattenseitigen Innenbohrung vermieden wird.

Die vorliegende Erfindung hat sich weiterhin zum Ziel gesetzt, das mit der erfindungsgemäßen Schweißverbindung hergestellte erfindungsgemäße Rohrbündel im Rahmen einer weiteren Ausgestaltung zu optimieren. Diese Ausgestaltung zeichnet sich grundsätzlich dadurch aus,

- dass das Innenrohr mit seiner rohrseitigen Innenbohrung in einer Ebene senkrecht zu einer Innenrohrlängsachse mit einer den Innenrohren zugewandten Stirnseite der scheibenförmigen Rohrträgerplatte, die eine plattenseitige Innenbohrung aufweist, verbunden ist,

- dass die rohrseitige Innenbohrung und die plattenseitige Innenbohrung gleichgroße Innendurchmesser aufweisen und miteinander fluchtend ausgerichtet sind,

- dass in einer unverschweißten Ausgangslage das Innenrohr und die Rohrträgerplatte mit einem ersten Formschluss, der radial sowie axial und jeweils gegeneinander gerichtet wirksam ist, zueinander festgelegt sind,

- dass eine umlaufende Rundschweißnaht orbital, von der plattenseitigen und der rohrseitigen Innenbohrung ausgehend, einlagig und von radial innen bis radial außen durchgängig ausgeführt ist,

- dass eine Schweißnahtbreite der umlaufenden Rundschweißnaht mindestens eine axiale Formschlusstiefe des ersten Formschlusses erfasst und

- dass die umlaufende Rundschweißnaht so positioniert ist, dass die Schweißnahtbreite maximal um die Formschlusstiefe in die Rohrträgerplatte, von der Seite des Innenrohres aus gesehen, eingreift.

Wenn die umlaufende Rundschweißnaht so positioniert ist, dass die Schweißnahtbreite maximal um die Formschlusstiefe in die Rohrträgerplatte, von der Seite des Innenrohres aus gesehen, eingreift, ist die Rohrträgerplatte lediglich mit dem Außendurchmesser des Innenrohres und mit maximal der Formschlusstiefe aufzusenken bzw. aufzubohren. Durch diese quantitative Ausgestaltung ist sichergestellt, dass kein Spalt mehr zwischen dem Außendurchmesser des Innenrohres und der Innenbohrung in der Rohrträgerplatte existiert, der nicht von der umlaufenden Rundschweißnaht überbrückt ist. Eine Aufsenkung mit weniger als der Formschlusstiefe verlagert einen Teil der Breite der umlaufenden Rundschweißnaht in einen der Rohrträgerplatte vorgelagerten Rohrbereich.

Ein anderer bekannter Vorschlag schafft bezüglich des ungünstigen Querschnittsverlaufs gleichfalls Abhilfe und verbessert insbesondere die Festigkeitseigenschaften unter wechselnden mechanischen und/oder thermischen Belastungen. Er sieht vor, dass die umlaufende Rundschweißnaht, bezogen auf die Rohrträgerplatte, um einen vorgelagerten axialen Formschlussabstand des ersten Formschlusses von der Rohrträgerplatte entfernt positioniert ist, wobei die Rohrträgerplatte in diesem Bereich auf eine Wandstärke zwischen der einfachen bis zur zweifachen Rohrwandstärke ausgehalst ist.

Weiterhin erlaubt die vorliegende Erfindung die Herstellung eines Produkt-zu-Produkt-Rohrbündel-Wärmeaustauschers mit wenigstens einem Rohrbündel, das jeweils nach einer seiner vorgeschlagenen Ausgestaltungen geschweißt ist.

KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Die Erfindung ist in den verschiedensten Ausgestaltungen eines Herstellungsverfahrens der gattungsgemäßen Art realisierbar. Weiterhin ist die Erfindung in den verschiedensten Ausführungsformen einer erfindungsgemäßen Hilfsvorrichtung für das erfindungsgemäße Herstellungsverfahren verwirklicht. Ein Rohrbündel für einen Produkt-zu-Produkt-Rohrbündel-Wärmeaustauscher, geschweißt mit dem Herstellungsverfahren für Schweißverbindungen zwischen Innenrohren und Rohrträgerplatten mit der Hilfsvorrichtung, sowie ein Produkt-zu-Produkt-Wärmeaustauscher mit wenigstens einem Rohrbündel, sind gleichfalls Gegenstand der Erfindung. Nachfolgend werden mit Bezug auf die Zeichnung das Herstellungsverfahren, die Hilfsvorrichtung, das Rohrbündel sowie der Produkt-zu-Produkt-Wärmeaustauscher anhand eines bevorzugten Ausführungsbeispiels beschrieben. Es zeigen

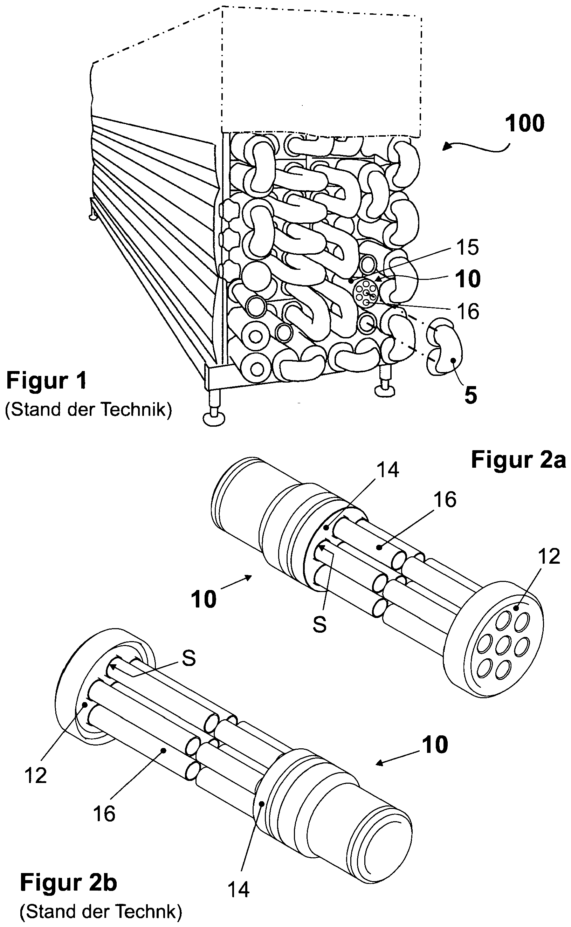

Figur 1 in schematischer und perspektivischer Darstellung einen Rohrbündel-Wärmeaustauscher nach dem Stand der Technik;

Figur 2a in perspektivischer Darstellung ein Rohrbündel nach dem Stand der Technik mit einer Anzahl Innenrohren und mit Blick auf eine den Innenrohren abgewandte Stirnseite (Vorderseite) und eine den Innenrohren zugewandte Stirnseite (Rückseite) der Rohrträgerplatte;

Figur 2b in perspektivischer Darstellung das Rohrbündel gemäß Figur 2a aus einer gegenüber Figur 2a umgekehrten Blickrichtung;

Figur 3 im Meridianschnitt ein Rohrbündel gemäß den Figuren 2a, 2b nach dem Stand der Technik, eingebettet in ein Gehäuse für die Zu- und Abfuhr eines Wärmeträgermediums;

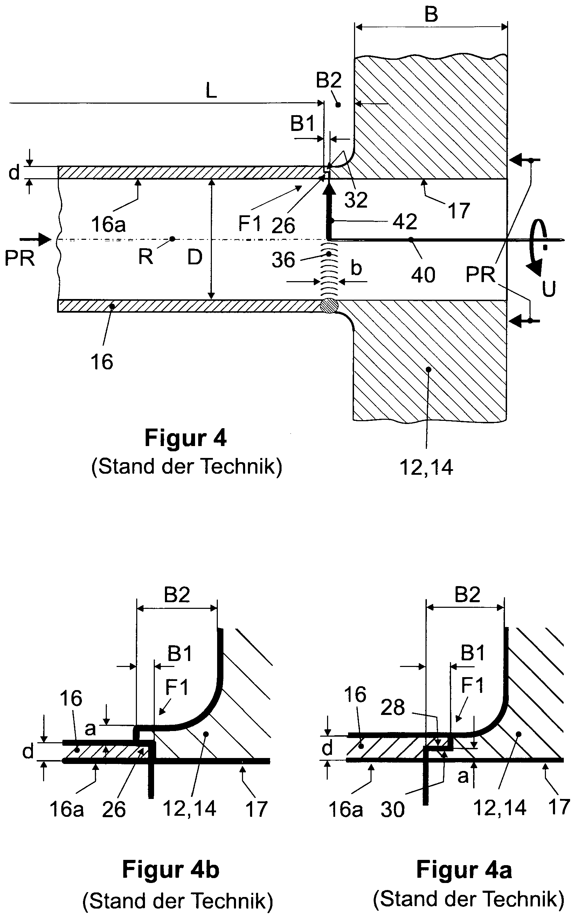

Figur 4 einen Meridianschnitt durch eine erste Schweißverbindung zwischen einem Innenrohr und einer Rohrträgerplatte in Verbindung mit einem Schweißwerkzeug nach dem Stand der Technik;

Figur 4a in vergrößerter Darstellung eine zur Ausgestaltung der ersten Schweißverbindung gemäß Figur 4 alternative zweite Ausgestaltung nach dem Stand der Technik;

Figur 4b in vergrößerter Darstellung eine zur Ausgestaltung der ersten Schweißverbindung gemäß Figur 4 alternative dritte Ausgestaltung nach dem Stand der Technik;

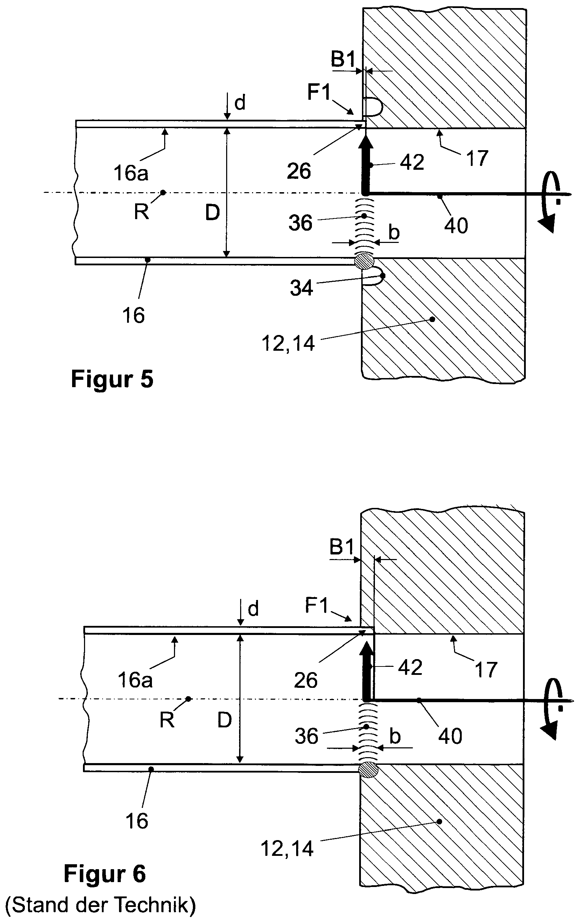

Figur 5 einen Meridianschnitt durch eine erfindungsgemäße Schweißverbindung zwischen einem Innenrohr und einer Rohrträgerplatte in Verbindung mit einem Schweißwerkzeug in Form einer erfindungsgemäßen vierten Ausgestaltung;

Figur 6 einen Meridianschnitt durch eine zur Ausgestaltung der ersten Schweißverbindung gemäß Figur 4 alternative fünfte Ausgestaltung nach dem Stand der Technik;

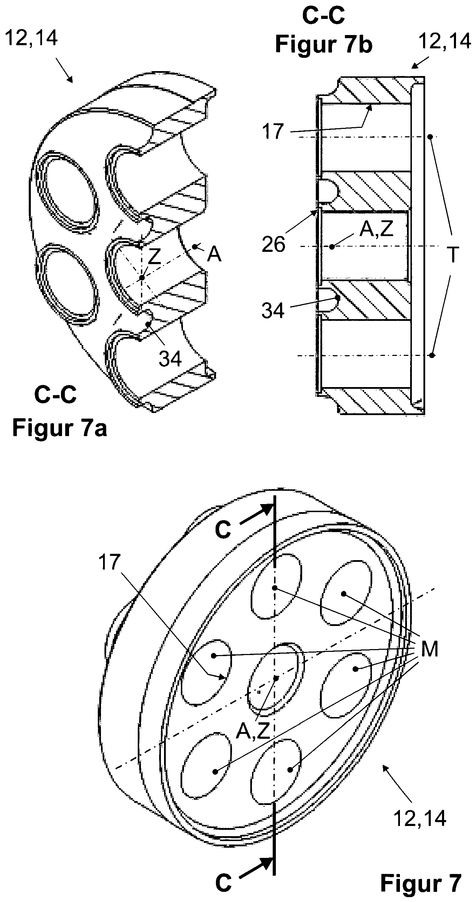

Figur 7 in perspektivischer Darstellung eine erfindungsgemäß ausgestaltete Rohrträgerplatte für sieben Innenrohre;

Figur 7a in perspektivischer Darstellung einen Meridianschnitt durch die Rohrträgerplatte gemäß einem in Figur 7 mit "C-C" gekennzeichneten Schnittverlauf;

Figur 7b in Ansicht den Meridianschnitt durch die Rohrträgerplatte gemäß Figur 7a;

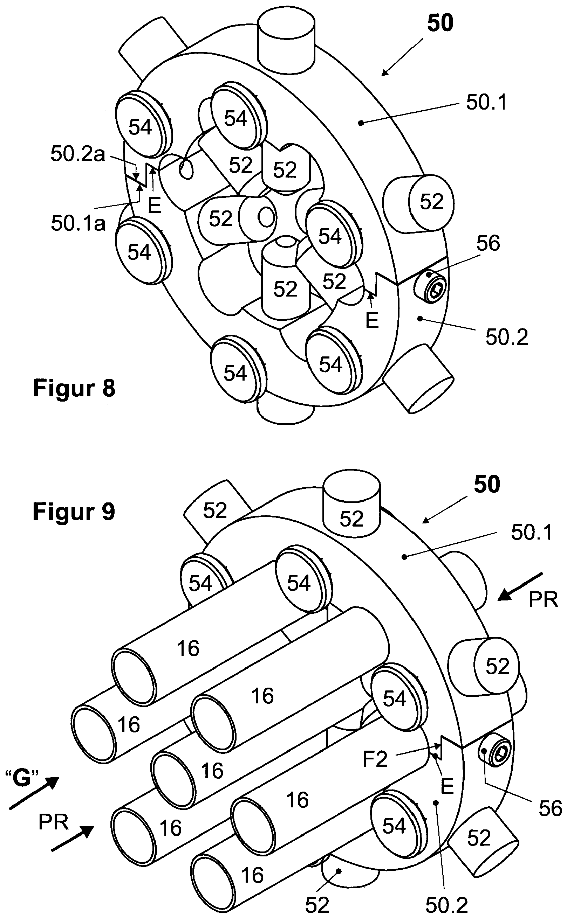

Figur 8 in perspektivischer Darstellung eine Gesamtansicht einer geschlossenen Hilfsvorrichtung ohne Innenrohre gemäß der Erfindung;

Figur 9 in perspektivischer Darstellung eine Gesamtansicht der geschlossenen Hilfsvorrichtung gemäß Figur 8 mit darin festgelegten Innenrohren und

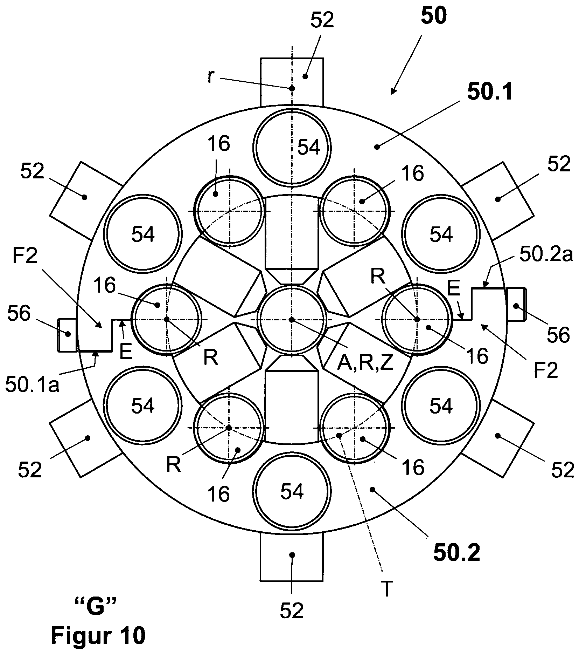

Figur 10 eine Ansicht der geschlossenen Hilfsvorrichtung gemäß Figur 9 entsprechend einer in Figur 9 mit "G" gekennzeichneten Blickrichtung.

**Figur 1** zeigt ein Ausführungsbeispiel eines Rohrbündel-Wärmeaustauschers 100 nach dem Stand der Technik, bei dem in der Regel eine Vielzahl von Rohrbündel 10 mit Verbindungsbogen 5 strömungstechnisch in Reihe geschaltet werden. Das Rohrbündel 10 nach dem Stand der Technik besteht aus einem Satz mit mehreren Innenrohren 16 (siehe **Figuren 2a, 2b**), die parallel zueinander verlaufen und strömungstechnisch auch parallel geschaltet sind, jeweils endseitig eine jeweilige plattenseitige Innenbohrung 17 in einer ersten und einer zweite Rohrträgerplatte 12, 14 durchdringen (**Figur 3**), sich dort abstützen und an ihrem Rohraußendurchmesser des Rohrendes an der den Innenrohren16 zugewandten Stirnfläche (Vorderseite) der Rohrträgerplatte 12, 14 mit dieser umlaufend verschweißt sind. Jeder Satz Innenrohre 16 ist in einem Außenrohr bzw. Mantelrohr 15 angeordnet (**Figuren 1, 3**). Ein Produkt, beispielsweise ein Lebensmittelprodukt, wird durch die Innenrohre 16 geleitet, und ein sogenanntes Wärmeträgermedium, beispielsweise Wasser oder Dampf, umströmt die Außenseite der Innenrohre 16 innerhalb des Außenrohres 15. Die Figuren **2a, 2b** zeigen weiterhin jeweils einen Ringspalt S, der zwischen einem Außendurchmesser jedes Innenrohres 16 und der jeweils zugeordneten plattenseitigen Innenbohrung 17 innerhalb der Rohrträgerplatte 12, 14 (**Figur 3**) gebildet wird.

Das aus dem Stand der Technik bekannte Rohrbündel 10 (**Figur 3** - nur die hier relevanten Bauteile sind bezeichnet; siehe auch DE 94 03 913 U1) besteht in seinem mittleren Teil, der unterbrochen dargestellt ist, aus dem einen Außenkanal 15* begrenzenden Außenrohr 15 (bzw. Außenmantel) mit einem, bezogen auf die Darstellungslage, nicht bezeichneten linksseitig angeordneten festlagerseitigen und einem nicht bezeichneten rechtsseitig angeordneten loslagerseitigen Außenmantelflansch. An letzterem schließt sich ein erstes Gehäuse mit einem zweiten Eintritt 22 und an den festlagerseitigen Außenmantelflansch schließt sich ein zweites Gehäuse mit einem zweiten Austritt 24 an. Eine Anzahl n von sich achsparallel zum Außenrohr 15 durch den Außenkanal 15* erstreckenden, gemeinsam einen Innenkanal 16* bildenden Innenrohre 16 ist endseitig jeweils in der linksseitigen Rohrträgerplatte 12, die Teil eines Festlagers ist, und der rechtsseitigen Rohrträgerplatte 14, die Teil eines Loslagers ist, abgestützt und an ihrem Rohraußendurchmesser über eine umlaufende Schweißnaht SN mit der den Innenrohren 16 zugewandten Stirnfläche der jeweils zugeordneten Rohrträgerplatte 12, 14 verschweißt. Diese Gesamtanordnung ist über eine nicht näher bezeichnete Öffnung am zweiten Gehäuse in das Außenrohr 15 eingeführt und über einen festlagerseitigen Austauscherflansch, der einen ersten Eintritt 18 aufnimmt, mit dem zweiten Gehäuse unter Zwischenschaltung von jeweils einer Dichtung zusammengespannt. Das Innenrohr 16, dessen Innenrohrlängsachse mit R bezeichnet ist, weist eine rohrseitige Innenbohrung 16a mit einem Innendurchmesser D auf. Die festlagerseitige und die loslagerseitige Rohrträgerplatte 12, 14 besitzen jeweils eine Plattenrotationsachse A, die koaxial zueinander angeordnet sind und die wiederum bei einem zentralen Innenrohr 16 zu dessen Innenrohrlängsachse R koaxial verlaufen. Die loslagerseitige Rohrträgerplatte 14 ist mit einem loslagerseitigen Anschlussstutzen verbunden, der einen ersten Austritt 20 aufnimmt.

Abhängig von der Anordnung des jeweiligen Rohrbündels 10 im Rohrbündel-Wärmeaustauscher 100 und seiner jeweiligen Beschaltung können die Innenrohre 16, bezogen auf die Darstellungslage, über den ersten Eintritt 18 entweder von links nach rechts zum ersten Austritt 20 oder umgekehrt von einem ersten Produkt P1, das wärmebehandelt werden soll, durchströmt werden. Beim jeweils benachbarten Rohrbündel 10, das mit dem vorstehend beschriebenen Rohrbündel 10 jeweils über den Verbindungsbogen 5 in Reihe geschaltet ist, kehren sich diese Ein- und Austrittsverhältnisse jeweils entsprechend um.

Der Außenkanal 15* kann von einem Wärmeträgermedium wie Wasser oder Dampf beaufschlagt sein. Bei einem sogenannten Wärmeaustausch Produkt-zu-Produkt ist das Wärmeträgermedium ein zweites Produkt P2. Die Durchströmung des Au-ßenkanals 15* kann vom zweiten Eintritt 22 zum zweiten Austritt 24 oder umgekehrt erfolgen. Abhängig von der Orientierung der Strömungsführung in den Innenrohren 16 und im Innenkanal 15* liegt dann ein Wärmeaustausch im Gleich- oder im Gegenstrom vor.

Bei einem Wärmeaustausch Produkt-zu-Produkt ist der Ringspalt S, der bereits im Zusammenhang mit den **Figuren 2a, 2b** thematisiert wurde, reinigungskritisch, weil das zweite Produkt P2, das während der Produktfahrt hier eindringen kann, nur durch eine überdosierte CIP-Reinigung vollständig oder hierbei sogar unter besonders schwierigen Bedingungen nicht hinreichend bis zur nächsten Produktfahrt abgereinigt werden kann.

Schweißverbindungen

Der in den **Figuren 2a, 2b** und **3** offenbarte Ringspalt S wird beseitigt, wenn die Schweißverbindung zwischen dem Innenrohr 16 und der Rohrträgerplatte 12, 14, wie anhand einer ersten Schweißverbindung in **Figur 4** gezeigt und an sich bekannt ist, ausgestaltet ist. Die erste Schweißverbindung zeichnet sich dadurch aus, dass das Innenrohr 16 mit seiner rohrseitigen Innenbohrung 16a in einer Ebene senkrecht zu der Innenrohrlängsachse R mit einer dem Innenrohr 16 zugewandten Stirnseite der scheibenförmigen Rohrträgerplatte 12, 14, die die plattenseitige Innenbohrung 17 aufweist, verbunden ist. Die rohrseitige Innenbohrung 16a und die plattenseitige Innenbohrung 17 weisen bevorzugt gleichgroße Innendurchmesser D auf und sind miteinander fluchtend ausgerichtet. Eine umlaufende Rundschweißnaht 36 ist, bezogen auf die Rohrträgerplatte 12, 14, um einen vorgelagerten axialen Formschlussabstand B2 eines ersten Formschlusses F1 von der Rohrträgerplatte 12, 14 entfernt positioniert, wobei die Rohrträgerplatte 12, 14 in diesem Bereich bis auf eine Rohrwandstärke d ausgehalst ist.

In einer unverschweißten Ausgangslage sind das Innenrohr 16 und die Rohrträgerplatte 12, 14 durch den ersten Formschluss F1, der radial sowie axial und jeweils gegeneinander gerichtet wirksam ist, zueinander festgelegt. Hierzu weist die rohrförmige Aushalsung der Rohrträgerplatte 12, 14 einen zur Innenrohrlängsachse R koaxial orientierten plattenseitigen Innenrezess 26 auf, der in axialer Richtung eine axiale Formschlusstiefe B1 besitzt und der einen rohrseitigen Außenrezess 32, der die gleiche Formschlusstiefe B1 besitzt, außenseits und koaxial umgreift.

Ein Schweißwerkzeug 40 wird in Richtung der Innenrohrlängsachse R in die plattenseitige Innenbohrung 17 bis zur planmäßigen Lage der Schweißnaht 36 eingeführt und führt mit einer senkrecht zur plattenseitigen und rohrseitigen Innenbohrung 17, 16a orientierten Schweißelektrode 42 die umlaufende Rundschweißnaht 36 mit einer orbitalen Bewegung U aus, und zwar bevorzugt einlagig und radial von innen bis radial außen durchgängig. Dabei wird eine Schweißnahtbreite b der umlaufenden Rundschweißnaht 36 so eingerichtet, dass sie mindestens die axiale Formschlusstiefe B1 des ersten Formschlusses F1 erfasst.

Im Verlauf der einzelnen Schweißung und über die gesamte Schweißabfolge aller Schweißungen für einen Satz Innenrohre 16, die mit der zugeordneten Rohrträgerplatte 12, 14 zu verschweißen sind, werden die Innenrohre 16 und die Rohrträgerplatte 12, 14 mit einer Anpresskraft PR gegeneinander gepresst.

Bei dem zum Einsatz kommenden Innenrohr 16 mit dem Innendurchmesser D, der Rohrwandstärke d sowie einer Innenrohrlänge L handelt es sich in der Regel um ein schlankes, dünnwandiges Innenrohr 16, das mit der in der Regel massiven Rohrträgerplatte 12, 14, die eine Plattenwandstärke B besitzt, zu verschweißen ist. Die konkreten quantitativen jeweiligen Abmessungen sind von der Größe des Rohrbündels 10 und von dessen Wärmeübertragungsleistung abhängig und können daher in einer allgemeinen Betrachtung nur durch die folgenden Verhältnisse der Abmessungen überschlägig angegeben werden:

$$D/d > 10; \quad L/D > 100 \text{ und } B/d > 10.$$

**Figur 4a** zeigt eine zweite Schweißverbindung nach dem Stand der Technik zwischen dem Innenrohr 16 mit der Innenbohrung 16a und der Rohrträgerplatte 12, 14 mit der durchmessergleichen plattenseitigen Innenbohrung 17. In einer unverschweißten Ausgangslage sind das Innenrohr 16 mit der Rohrwandstärke d und die Rohrträgerplatte 12, 14 durch den ersten Formschluss F1, der radial sowie axial und jeweils gegeneinander gerichtet wirksam ist, zueinander festgelegt. Hierzu weist die rohrförmige Aushalsung der Rohrträgerplatte 12, 14 mit ihrem vorgelagerten axialen Formschlussabstand B2 einen zur Innenrohrlängsachse R koaxial orientierten plattenseitigen Außenrezess 28 mit einer Rezesswandstärke a auf, der in axialer Richtung die axiale Formschlusstiefe B1 besitzt und der in einen rohrseitigen Innenrezess 30, der die gleiche Formschlusstiefe B1 besitzt, innenseits und koaxial eingreift.

Eine dritte Schweißverbindung nach dem Stand der Technik zwischen dem Innenrohr 16 mit der rohrseitigen Innenbohrung 16a und der Rohrträgerplatte 12, 14 mit der durchmessergleichen plattenseitigen Innenbohrung 17 ist in **Figur 4b** dargestellt. Hier befindet sich zur Realisierung des ersten Formschlusses F1 nur in der Aushalsung der Rohrträgerplatte 12, 14 der plattenseitige Innenrezess 26, der die volle Rohrwandstärke d mit der axialen Formschlusstiefe B1 außenseits koaxial umgreift, wobei die radiale Abmessung der Wandstärke der Aushalsung, die sich über den vorgelagerten axialen Formschlussabstand B2 erstreckt, die Rohrwandstärke d um die Rezesswandstärke a übersteigt.

Die erste bis dritte Schweißverbindung der **Figuren 4, 4a** und **4b** zeichnen sich jeweils weiterhin dadurch aus, dass die umlaufende Rundschweißnaht 36, bezogen auf die Rohrträgerplatte 12, 14, um den vorgelagerten axialen Formschlussabstand des ersten Formschlusses F1 von der Rohrträgerplatte 12, 14 entfernt positioniert ist, wobei die Rohrträgerplatte 12, 14 in diesem Bereich auf eine Wandstärke zwischen der einfachen bis zur zweifachen Rohrwandstärke d ausgehalst ist.

In einer erfindungsgemäßen vierten Schweißverbindung (**Figur 5**) und in einer fünften Schweißverbindung nach dem Stand der Technik (**Figur 6**) greift zur Realisierung des ersten Formschlusses F1 das Innenrohr 16, das in seiner rohrseitigen Innenbohrung 16a den gleichen Innendurchmesser D wie die plattenseitige Innenbohrung 17 in der Rohrträgerplatte 12, 14 aufweist, mit der vollen Rohrwandstärke d und mit der axialen Formschlusstiefe B1 unmittelbar in die Stirnfläche der Rohrträgerplatte 12, 14 ein.

Bei der Ausführung gemäß **Figur 6** ist die axiale Formschlusstiefe B1 des plattenseitigen Innenrezesses 26 maximal, und zwar derart bemessen, dass die notwendige Schweißnahtbreite b die axiale Formschlusstiefe B1 vollständig erfasst und somit vollständig in die Rohrträgerplatte 12, 13, von der Seite des Innenrohres 16 aus gesehen, eingreift. Dieser Sachverhalt ergibt sich dadurch, dass die umlaufende Rundschweißnaht 36 so positioniert ist, dass die Schweißnahtbreite b maximal um die axiale Formschlusstiefe in die Rohrträgerplatte 12, 14, von der Seite des Innenrohres 16 aus gesehen, eingreift.

Bei der erfindungsgemäßen Ausführung gemäß **Figur 5** ist die axiale Formschlusstiefe B1 des plattenseitigen Innenrezesses 26 so bemessen, dass sich die notwendige Schweißnahtbreite b der umlaufenden Rundschweißnaht 36 nur zu einem Teil innerhalb der Rohrträgerplatte 12, 14 befindet und zum anderen Teil einen Abschnitt des außenseits freien Innenrohres 16 erfasst.

Zur Vermeidung eines unstetigen, im vorliegenden Falle eines sprunghaft sich verändernden Querschnittsverlaufs der zu verschweißenden Wandstärken ist die erfindungsgemäße vierte Schweißverbindung gemäß **Figur 5** dadurch weiterhin gegenüber der fünften Schweißverbindung nach dem Stand der Technik gemäß **Figur 6** modifiziert, dass die Rohrträgerplatte 12, 14, radial außenseits von der umlaufenden Rundschweißnaht 36 beabstandet, eine umlaufende, axial sich erstreckende, ringspaltförmige plattenseitige Ausnehmung 34 aufweist. Diese ist hinsichtlich ihres radialen Abstandes von der Schweißnaht 36 und ihrer radialen Breite so ausgebildet, dass die mit der umlaufenden Rundschweißnaht 36 zu verschweißende Wandstärke der Rohrträgerplatte 12, 14 einen Wert annimmt, der zwischen der einfachen bis zur zweifachen Rohrwandstärke d liegt (siehe auch **Figuren 7a, 7b**).

Verfahren

Die in den **Figuren 4, 4a, 4b, 5** und **6** beschriebene erste bis fünfte Ausgestaltung der Schweißverbindungen werden aufgabengemäß mit einem erfindungsgemäßen Herstellungsverfahren mittels einer erfindungsgemäßen Hilfsvorrichtung 50 (Figuren 8, 9 und 10) realisiert. Das Herstellungsverfahren geht davon aus, dass die Rohrträgerplatte 12, 14 durch die Vorgabe von mehr als einer plattenseitigen Innenbohrung 17 ein Rohrbelegungsmuster M festlegt (**Figur 7**) für die Anordnung zugeordneter, parallel zueinander angeordneter Innenrohre 16. Die jeweilige Plattenrotationsachse A der Rohrträgerplatte 12, 14 muss nicht notwendigerweise mit einem Innenrohr 16 belegt sein. Die limitierende Begrenzung für eine Anzahl n Innenrohre 16 ist dann gegeben, wenn ein einzig möglicher Teilkreis T (**Figur 10;** eine mehrfache Teilkreisanordnung ist mit der vorgeschlagenen Hilfsvorrichtung 50 nicht realisierbar) die auf diesem anzuordnenden Innenrohre 16 unter den gebotenen Wärmeübertragungsbedingungen (notwendige Abstände der Innenrohre 16 voneinander) nicht mehr aufnehmen kann.

Die Hilfsvorrichtung 50 legt die jeweils notwendige Anzahl n Innenrohre 16 in Gänze entsprechend dem Rohrbelegungsmuster M zueinander und im jeweiligen ersten Formschluss F1 mit der Rohrträgerplatte 12, 14 mittels eines zweiten Formschlusses F2 unverrückbar fest (**Figuren 9, 10**). Über die Zeitdauer der Schweißungen für alle Innenrohre 16 wird die Rohrträgerplatte 12, 14 in Richtung der Innenrohrlängsachsen R an die Innenrohre 16 mit der Anpresskraft PR angepresst (**Figur 9;** Rohrträgerplatte 12, 14 ist nicht dargestellt) und es werden die Innenrohre 16 nacheinander mit der Rohrträgerplatte 12, 14 verschweißt.

Eine vorteilhafte Schweißabfolge sieht diesbezüglich vor, dass, falls vorhanden, zunächst das zentrale Innenrohr 16 und anschließend die auf dem Teilkreis T um das zentrale Innenrohr 16 herum angeordneten außenliegenden Innenrohre 16, jeweils in gegenüberliegender Abfolge, mit der Rohrträgerplatte 12, 14 verschweißt werden.

Hilfsvorrichtung

Die erfindungsgemäße Hilfsvorrichtung 50 (**Figuren 8, 9, 10**) ermöglicht eine Schweißverbindung, die folgendermaßen ausgestaltet ist:

- Das Innenrohr 16 mit seiner rohrseitigen Innenbohrung 16a ist in einer Ebene senkrecht zu der Innenrohrlängsachse R mit einer den Innenrohren 16 zugewandten Stirnseite der scheibenförmigen Rohrträgerplatte 12, 14 , die eine plattenseitige Innenbohrung 17 aufweist, verbunden.
- Die rohrseitige Innenbohrung 16a und die plattenseitige Innenbohrung 17 weisen gleichgroße Innendurchmesser D auf und sind miteinander fluchtend ausgerichtet.
- In einer unverschweißten Ausgangslage sind das Innenrohr 16 und die Rohrträgerplatte 12, 14 mit dem ersten Formschluss F1, der radial sowie axial und jeweils gegeneinander gerichtet wirksam ist, zueinander festgelegt.
- Die umlaufende Rundschweißnaht 36 ist orbital, von der plattenseitigen und der rohrseitigen Innenbohrung 17, 16a ausgehend, einlagig und von radial innen bis radial außen durchgängig ausgeführt.
- Die Schweißnahtbreite b der umlaufenden Rundschweißnaht 36 erfasst mindestens die axiale Formschlusstiefe B1 des ersten Formschlusse F1.

Die Hilfsvorrichtung 50 besteht aus einer ersten und einer zweiten Halteringhälfte 50.1, 50.2, die nach einer Fügung miteinander einen geschlossenen Ring bilden. Die Halteringhälften 50.1, 50.2 berühren sich in einer Trennebene E, die durch ein Zentrum Z der Hilfsvorrichtung 50 verläuft, und in dieser Trennebene E bilden die Halteringhälften 50.1, 50.2 über eine Trennebenekontur 50.1a und eine Trennebenegegenkontur 50.2a (**Figuren 8, 10**) den unverschieblichen zweiten Formschluss F2 miteinander.

Vorzugsweise legt der zweite Formschluss F2 die erste und die zweite Halbringhälfte 50.1, 50.2 in radialer Richtung zueinander fest. Die erste und die zweite Halbringhälfte 50.1, 50.2 sind darüber hinaus vorteilhaft durch ein am Umfang der ersten und der zweiten Halbringhälfte 50.1, 50.2 angeordnetes Verbindungsmittel 56, beispielsweise eine Verbindungsschraube, die diametral zueinander angeordnet sind, lösbar miteinander verbunden. Dadurch wird der radial orientierte zweite Formschluss F2 zusätzlich fixiert und eine axiale Verschiebung der Halteringhälften 50.1, 50.2 gegeneinander verhindert.

Die Rohrträgerplatte 12, 14 legt durch die Vorgabe von mehr als einer in ihr vorgesehenen plattenseitigen Innenbohrung 17 das Rohrbelegungsmuster M fest für die Anordnung parallel zueinander angeordneter Innenrohre 16 (**Figuren 7, 7a, 7b**). Das Rohrbelegungsmuster M ist in den Halteringhälften 50.1, 50.2 derart abgebildet, dass auf dem einzigen Teilkreis T vorzugsweise gleichverteilt angeordnete Innenrohre 16 jeweils maximal halbseitig von den Halteringhälften 50.1, 50.2 umschlossen sind (**Figur 10**), wobei die Öffnung der jeweils umschließenden Kontur dem Zentrum Z der Hilfsvorrichtung 50 zugewandt ist. Die Trennebene E verläuft zusätzlich durch mindestens eine auf dem Teilkreis T liegende Innenrohrlängsachse R eines Innenrohres 16. Es sind Haltemittel 52, beispielsweise vorzugsweise zylindrische Haltebolzen, vorgesehen, die jeweils am Umfang der Halteringhälften 50.1, 50.2 und mit einer Haltemittellängsachse r sternförmig zum Zentrum Z hin orientiert in die Halteringhälften 50.1, 50.2 verschieblich in Richtung der Halteringlängsachse r eingreifen. Die Haltemittel 52 tangieren beiderseits mit ihrer Mantelfläche jeweils auf dem Teilkreis T angeordnete, benachbarte Innenrohre 16. Weiterhin legen die Haltemittel 52 mit ihrer jeweiligen dem Zentrum Z zugewandten Stirnseite erforderlichenfalls ein im Zentrum Z angeordnetes Innenrohr 16 fest und sind in dieser Position selbst jeweils lösbar festgelegt (**Figur 10**). Vorzugsweise jeweils durch ein Feststellmittel 54 in der zugeordneten Halteringhälfte 50.1, 50.2, vorzugsweise durch eine Feststellschraube, sind die Haltemittel 52 unverrückbar festgelegt.

Im Ausführungsbeispiel einer besonders vorteilhaften Rohrbelegung gemäß den **Figuren 7, 7a, 7b** sind sieben plattenseitige Innenbohrungen 17 vorgesehen, wobei sich eine plattenseitige Innenbohrung 17 koaxial zur Plattenrotationsachse A der Rohrträgerplatte 12, 14 befindet und sechs plattenseitige Innenbohrungen 17 gleichverteilt auf dem Teilkreis T (**Figuren 8, 9, 10**) angeordnet sind. In diesem Falle verläuft die Trennebene E zusätzlich durch zwei diametral zueinander angeordnete Innenrohre 16 bzw. plattenseitige Innenbohrungen 17 (**Figur 10**).

Die Festlegung der Innenrohre 16 in der Hilfsvorrichtung 50 durch Haltemittel 52 kann auch in anderer als in der vorstehend beschriebenen Weise erfolgen, beispielsweise durch verschiebliche und fixierbare Formstücke, die in axialer Richtung von der der Rohrträgerplatte 12, 14 abgewandten Seite der Hilfsvorrichtung 50 in eine ringförmige, lösbar teilbare Hilfsvorrichtung 50 zwischen die Innenrohre 16 eingelegt werden können und die Innenrohre 16 unverrückbar zueinander festlegen. Jedwede Ausgestaltung der Hilfsvorrichtung 50, die den Satz Innenrohre 16 während der Schweißabfolge zueinander unverrückbar mittels des zweiten Formschlusses F2 festlegt und die Innenrohre 16 in Gänze dabei im ersten Formschluss F1 gegenüber der Rohrträgerplatte 12, 14 justiert und gegen letztere mit der Anpresskraft PR anpresst, ermöglicht die Durchführung des erfindungsgemäßen Herstellungsverfahrens für Schweißverbindungen zwischen Innenrohren 16 und Rohrträgerplatten 12, 14 eines Rohrbündels 10 für einen Produkt-zu-Produkt-Rohrbündel-Wärmeaustauscher 100.

### Rohrbündel

Die vorliegende Erfindung beansprucht weiterhin ein Rohrbündel 10 für einen Produkt-zu-Produkt-Rohrbündel-Wärmeaustauscher 100, wie es in seinem grundsätzlichen Aufbau im Stand der Technik bekannt und in der **Figur 3** in Verbindung mit den **Figuren 2a, 2b** beispielhaft dargestellt ist. Im Gegensatz zu dieser bekannten Ausführung wird der kritische Ringspalt S dadurch vermieden, dass das Rohrbündel 10 in diesem Bereich mit einem Herstellungsverfahren für Schweißverbindungen zwischen Innenrohren 16 und Rohrträgerplatten 12, 14 nach Anspruch 1 oder 2 geschweißt ist, wobei die Schweißverbindung als eine umlaufende Rundschweißnaht 36 ausgeführt ist und die Rohrträgerplatte 12, 14, radial außenseits von der umlaufenden Rundschweißnaht 36 beabstandet, eine umlaufende, axial sich erstreckende, ringspaltförmige plattenseitige Ausnehmung 34 aufweist. Die Ausnehmung 34 ist so ausgebildet, dass die mit der umlaufenden Rundschweißnaht 36 zu verschweißende Wandstärke der Rohrträgerplatte 12, 14 einen Wert annimmt, der zwischen der einfachen bis zur zweifachen Rohrwandstärke d liegt.

Die vorliegende Erfindung beansprucht weiterhin ein Rohrbündel 10 für einen Produkt-zu-Produkt-Rohrbündel-Wärmeaustauscher 100, wie es in seinem grundsätzlichen Aufbau im Stand der Technik bekannt und in der **Figur 3** in Verbindung mit den **Figuren 2a, 2b** beispielhaft dargestellt ist. Im Gegensatz zu dieser bekannten Ausführung wird der kritische Ringspalt S dadurch vermieden, dass das Rohrbündel 10 in diesem Bereich mit dem Herstellungsverfahren für Schweißverbindungen zwischen Innenrohren 16 und Rohrträgerplatten 12, 14 mit einer Hilfsvorrichtung 50 nach einem der Ansprüche 3 bis 7 durchgeführt wird.

Das mit dem Herstellungsverfahren für Schweißverbindungen zwischen Innenrohren 16 und Rohrträgerplatten 12, 14 nach Anspruch 8 und mit der Hilfsvorrichtung 50 nach Anspruch 9 geschweißte Rohrbündel 10 weist eine Schweißverbindung auf, die derart ausgestaltet ist,

- dass das Innenrohr 16 mit seiner rohrseitigen Innenbohrung 16a in einer Ebene senkrecht zu einer Innenrohrlängsachse R mit einer den Innenrohren 16 zugewandten Stirnseite der scheibenförmigen Rohrträgerplatte 12, 14, die eine plattenseitige Innenbohrung 17 aufweist, verbunden ist,
- dass die rohrseitige Innenbohrung 16a und die plattenseitige Innenbohrung 17 gleichgroße Innendurchmesser D aufweisen und miteinander fluchtend ausgerichtet sind,
- dass in einer unverschweißten Ausgangslage das Innenrohr 16 und die Rohrträgerplatte 12, 14 mit einem ersten Formschluss F1, der radial sowie axial und jeweils gegeneinander gerichtet wirksam ist, zueinander festgelegt sind,

- dass eine umlaufende Rundschweißnaht 36 orbital, von der plattenseitigen und rohrseitigen Innenbohrung 17, 16a ausgehend, einlagig durchgängig von radial innen bis radial außen ausgeführt ist,
- dass eine Schweißnahtbreite b der umlaufenden Rundschweißnaht 36 mindestens eine axiale Formschlusstiefe B1 des ersten Formschlusses F1 erfasst und
- dass die umlaufende Rundschweißnaht 36 so positioniert ist, dass die Schweißnahtbreite b maximal um die axiale Formschlusstiefe B1 in die Rohrträgerplatte 12, 14, von der Seite des Innenrohres 16 aus gesehen, eingreift.

Die vorliegende Erfindung beansprucht weiterhin einen Produkt-zu-Produkt-Rohrbündel-Wärmeaustauscher mit wenigstens einem Rohrbündel 10, wie es in seinem grundsätzlichen Aufbau im Stand der Technik bekannt und in der **Figur 3** in Verbindung mit den **Figuren 2a, 2b** beispielhaft dargestellt ist. Im Gegensatz zu dieser bekannten Ausführung wird der kritische Ringspalt S dadurch vermieden, dass das Rohrbündel 10 in diesem Bereich nach einem der Ansprüche 8 bis 10 konfiguriert ist.

BEZUGSZEICHENLISTE DER VERWENDETEN ABKÜRZUNGEN

| 100 | Rohrbündel-Wärmeaustauscher |
| 5 | Verbindungsbogen |
| 10 | Rohrbündel |
| 12 | erste Rohrträgerplatte |
| 14 | zweite Rohrträgerplatte |
| | |
| 15 | Außenrohr (Mantelrohr) |
| 15* | Außenkanal |
| | |
| 16 | Innenrohr |
| 16a | rohrseitige Innenbohrung |
| 16* | Innenkanal |
| | |
| 17 | plattenseitige Innenbohrung |
| 18 | erster Eintritt |
| 20 | erster Austritt |
| 22 | zweiter Eintritt |
| 24 | zweiter Austritt |
| 26 | plattenseitiger Innenrezess |
| 28 | plattenseitiger Außenrezess |
| 30 | rohrseitiger Innenrezess |
| 32 | rohrseitiger Außenrezess |
| 34 | plattenseitige Ausnehmung |
| 36 | umlaufende Rundschweißnaht |

| 40 | Schweißwerkzeug |
| 42 | Schweißelektrode |
| | |
| 50 | Hilfsvorrichtung |
| 50.1 | erste Halteringhälfte |
| 50.1a | Trennebenekontur |
| 50.2 | zweite Halteringhälfte |
| 50.2a | Trennebenegegenkontur |
| 52 | Haltemittel (-bolzen |
| 54 | Feststellmittel (-schraube) |
| 56 | Verbindungsmittel (-schraube) |
| | |
| A | Plattenrotationsachse |
| B | Plattenwandstärke |
| B1 | axiale Formschlusstiefe |
| B2 | vorgelagerter axialer Formschlussabstand |
| D | Innendurchmesser |
| E | Trennebene |
| F1 | erster Formschluss |
| F2 | zweiter Formschluss |
| L | Innenrohrlänge |
| M | Rohrbelegungsmuster |
| P1 | erstes Produkt |
| P2 | zweites Produkt |
| PR | Anpresskraft |
| R | Innenrohrlängsachse |
| S | Ringspalt |
| SN | Schweißnaht |
| T | Teilkreis |
| U | orbitale Bewegung |
| Z | Zentrum |
| | |
| a | Rezesswandstärke |
| b | Schweißnahtbreite |
| d | Rohrwandstärke |
| n | Anzahl (Innenrohre; Innenbohrungen) |
| r | Haltemittellängsachse |

| D/d > 10 | Verhältnis des rohrseitigen Innendurchmessers des Innenrohres zur Rohrwandstärke |
| L/D > 100 | Verhältnis der Innenrohrlänge zum rohrseitigen Innendurchmesser des Innenrohres |
| B/d > 10 | Verhältnis der Plattenwandstärke zur Rohrwandstärke |

**Patentansprüche**

1. Herstellungsverfahren für Schweißverbindungen zwischen Innenrohren (16) und Rohrträgerplatten (12, 14) eines Rohrbündels (10) für einen Produkt-zu-Produkt-Rohrbündel-Wärmeaustauscher (100) mittels einer Hilfsvorrichtung (50), wobei die jeweilige Rohrträgerplatte (12, 14) mit ihrer den Innenrohren (16) zugewandten Stirnseite verschweißt wird, durchgeführt mit folgenden Schritten (i) bis (iii):

(i) Ausrichten der Innenrohre (16) mit zugeordneten, in der Rohrträgerplatte (12, 14) angeordneten plattenseitigen Innenbohrungen (17) derart, dass die Innenrohre (16) und die plattenseitigen Innenbohrungen (17) miteinander fluchten;

(ii) Festlegen des jeweiligen Innenrohres (16) und der Rohrträgerplatte (12, 14) zueinander in einer unverschweißten Ausgangslage mit einem Formschluss, der radial und gegeneinander gerichtet wirksam ist,

wobei mehr als eine plattenseitige Innenbohrung (17) vorgegeben und damit ein Rohrbelegungsmuster (M) durch die Rohrträgerplatte (12, 14) festlegt wird für zugeordnete, parallel zueinander angeordnete Innenrohre (16);

(iii) unverrückbares Festlegen einer jeweils notwendigen Anzahl (n) Innenrohre (16) in Gänze entsprechend dem Rohrbelegungsmuster (M) zueinander und im jeweiligen Formschluss mit der Rohrträgerplatte (12, 14) mittels der Hilfsvorrichtung (50),

**gekennzeichnet durch** die folgenden weiteren Schritte (iv) bis (viii):

(iv) Anpressen der Stirnseite der Rohrträgerplatte (12, 14) in Richtung der Innenrohrlängsachsen (R) der Innenrohre (16) an die Stirnseite der Innenrohre (16) über die Zeitdauer der Schweißungen für alle Innenrohre (16) mit einem ersten Formschluss (F1), der radial sowie axial und jeweils gegeneinander gerichtet wirksam ist, wobei die plattenseitige Innenbohrung (17) und eine rohrseitige Innenbohrung (16a) des Innenrohres (16) gleichgroße Innendurchmesser (D) aufweisen,

(v) unverrückbares Festlegen der jeweils notwendigen Anzahl (n) Innenrohre (16) in Gänze entsprechend dem Rohrbelegungsmuster (M) zueinander mittels eines zweiten Formschlusses (F2) der Hilfsvorrichtung (50), der lösbar ausgestaltet ist,

(vi) Ausführen einer umlaufenden Rundschweißnaht (36) orbital, von der plattenseitigen und der rohrseitigen Innenbohrung (17, 16a) ausgehend, einlagig und von radial innen bis radial außen durchgängig, wobei von einer Schweißnahtbreite (b) der umlaufenden Rundschweißnaht (36) mindestens eine axiale Formschlusstiefe (B1) des ersten Formschlusses (F1) erfasst wird,

(vii) Verschweißen der Innenrohre (16) mit der Rohrträgerplatte (12, 14) nacheinander und

(viii) Lösen und Entfernen der Hilfsvorrichtung (50) von der verschweißten Rohranordnung.

2. Herstellungsverfahren nach Anspruch 1,

**dadurch gekennzeichnet,**
**dass** eine Schweißabfolge so vorgesehen ist, dass, zunächst ein zentral in der Rohrträgerplatte (12, 14) angeordnetes Innenrohr (16) und anschließend die auf einem Teilkreis (T) um das zentrale Innenrohr (16) herum angeordneten außenliegenden Innenrohre (16), jeweils in gegenüberliegender Abfolge, mit der Rohrträgerplatte (12, 14) verschweißt werden.

3. Hilfsvorrichtung (50) für ein Herstellungsverfahren für Schweißverbindungen zwischen Innenrohren (16) und Rohrträgerplatten (12, 14) eines Rohrbündels (10) für einen Produkt-zu-Produkt-Rohrbündel-Wärmeaustauscher (100), wobei die Schweißverbindung in an sich bekannter Weise derart ausgestaltet ist,

• dass das Innenrohr (16) mit seiner rohrseitigen Innenbohrung (16a) in einer Ebene senkrecht zu einer Innenrohrlängsachse (R) mit einer den Innenrohren (16) zugewandten Stirnseite der scheibenförmigen Rohrträgerplatte (12, 14), die eine plattenseitige Innenbohrung (17) aufweist, verbunden ist,

• dass die rohrseitige Innenbohrung (16a) und die plattenseitige Innenbohrung (17) gleichgroße Innendurchmesser (D) aufweisen und miteinander fluchtend ausgerichtet sind,

• dass in einer unverschweißten Ausgangslage das Innenrohr (16) und die Rohrträgerplatte (12, 14) mit einem ersten Formschluss (F1), der radial sowie axial und jeweils gegeneinander gerichtet wirksam ist, zueinander festgelegt sind,

• dass eine umlaufende Rundschweißnaht (36) orbital, von der plattenseitigen und der rohrseitigen Innenbohrung (17, 16a) ausgehend, einlagig und von radial innen bis radial außen durchgängig ausgeführt ist und

• dass eine Schweißnahtbreite (b) der umlaufenden Rundschweißnaht (36) mindestens eine axiale Formschlusstiefe (B1) des ersten Formschlusses (F1) erfasst,

**dadurch gekennzeichnet,**

• **dass** eine erste und eine zweite Halteringhälfte (50.1, 50.2) vorgesehen sind, die einen geschlossenen Ring bilden,

• **dass** sich die Halteringhälften (50.1, 50.2) in einer Trennebene (E), die durch ein Zentrum (Z) der Hilfsvorrichtung (50) verläuft, berühren und dass in der Trennebene (E) die Halteringhälften (50.1, 50.2) einen unverschieblichen zweiten Formschluss (F2) miteinander bilden,

• **dass** die Rohrträgerplatte (12, 14) durch die Vorgabe von mehr als einer vorgesehenen plattenseitigen Innenbohrung (17) ein Rohrbelegungsmuster (M) festlegt für die Anordnung parallel zueinander angeordneter Innenrohre (16),

• **dass** das Rohrbelegungsmuster (M) in den Halteringhälften (50.1, 50.2) derart abgebildet ist, dass auf einem einzigen Teilkreis (T) gleichverteilt angeordnete Innenrohre (16) jeweils maximal halbseitig von den Halteringhälften (50.1, 50.2) umschlossen sind, wobei die Öffnung der jeweils umschließenden Kontur dem Zentrum (Z) der Halteringhälften (50.1, 50.2) zugewandt ist,

• **dass** die Trennebene (E) zusätzlich durch mindestens eine auf dem Teilkreis (T) liegende Innenrohrlängsachse (R) verläuft,

• **dass** Haltemittel (52) vorgesehen sind, die jeweils am Umfang der Halteringhälften (50.1, 50.2) und sternförmig zum Zentrum (Z) hin orientiert in die Halteringhälften (50.1, 50.2) verschieblich eingreifen,

• **dass** die Haltemittel (52) auf dem Teilkreis (T) angeordnete, benachbarte Innenrohre (16) jeweils tangieren und

• **dass** die Haltemittel (52) mit ihrer jeweiligen dem Zentrum (Z) zugewandten Stirnseite erforderlichenfalls ein im Zentrum (Z) angeordnetes Innenrohr (16) festlegen und in dieser Position selbst jeweils lösbar festgelegt sind.

4. Hilfsvorrichtung (50) nach Anspruch 3,
   **dadurch gekennzeichnet,**
   **dass** der zweite Formschluss (F2) die erste und die zweite Halteringhälfte (50.1, 50.2) in radialer Richtung zueinander festlegt.

5. Hilfsvorrichtung (50) nach Anspruch 3 oder 4,
   **dadurch gekennzeichnet,**
   **dass** die Haltemittel (52) jeweils durch ein Feststellmittel (54) in der zugeordneten Halteringhälfte (50.1, 50.2) unverrückbar festgelegt sind.

6. Hilfsvorrichtung (50) nach einem der Ansprüche 3 bis 5,
   **dadurch gekennzeichnet,**
   **dass** die erste und die zweite Halteringhälfte (50.1, 50.2) durch ein am Umfang der ersten und der zweiten Halteringhälfte (50.1, 50.2) angeordnetes Verbindungsmittel (56), die diametral zueinander angeordnet sind, lösbar miteinander verbunden sind.

7. Hilfsvorrichtung (50) nach einem der Ansprüche 3 bis 6,
   **dadurch gekennzeichnet,**

   • **dass** sieben Innenrohre (16) vorgesehen sind, wobei sich ein Innenrohr (16) koaxial im Zentrum (Z) befindet und sechs Innenrohre (16) gleichverteilt auf dem Teilkreis (T) angeordnet sind und

   • **dass** die Trennebene (E) zusätzlich durch zwei diametral zueinander angeordnete Innenrohre (16) verläuft.

8. Rohrbündel (10) für einen Produkt-zu-Produkt-Rohrbündel-Wärmeaustauscher (100), mit Innenrohren (16) und Rohrträgerplatten (12, 14), diese Teile geschweißt mit einem Herstellungsverfahren für Schweißverbindungen zwischen Innenrohren (16) und Rohrträgerplatten (12, 14) nach Anspruch 1 oder 2,
   **dadurch gekennzeichnet,**
   **dass** die Schweißverbindung als eine umlaufende Rundschweißnaht (36) ausgeführt ist und die Rohrträgerplatte (12, 14), radial außenseits von der umlaufenden Rundschweißnaht (36) beabstandet, eine umlaufende, axial sich erstreckende, ringspaltförmige plattenseitige Ausnehmung (34) aufweist, die so ausgebildet ist, dass die mit der umlaufenden Rundschweißnaht (36) zu verschweißende Wandstärke der Rohrträgerplatte (12, 14) einen Wert annimmt, der zwischen der einfachen bis zur zweifachen Rohrwandstärke (d) liegt.

9. Rohrbündel (10) nach Anspruch 8,
   **dadurch gekennzeichnet,**
   **dass** das Herstellungsverfahren für Schweißverbindungen zwischen Innenrohren (16) und Rohrträgerplatten (12, 14) mit einer Hilfsvorrichtung (50) nach einem der Ansprüche 3 bis 7 durchgeführt werden kann.

10. Rohrbündel (10) nach Anspruch 8 oder 9, mit Innenrohren (16) und Rohrträgerplatten (12, 14) und mit der Schweißverbindung zwischen den Innenrohren (16) und den Rohrträgerplatten (12, 14), wobei die Schweißverbindung derart ausgestaltet ist,

    • dass das Innenrohr (16) mit seiner rohrseitigen Innenbohrung (16a) in einer Ebene senkrecht zu einer Innenrohrlängsachse (R) mit einer den Innenrohren (16) zugewandten Stirnseite der scheibenförmigen Rohrträgerplatte (12, 14), die eine plattenseitige Innenbohrung (17) aufweist, verbunden ist,
    • dass die rohrseitige Innenbohrung (16a) und die plattenseitige Innenbohrung (17) gleichgroße Innendurchmesser (D) aufweisen und miteinander fluchtend ausgerichtet sind,
    • dass in einer unverschweißten Ausgangslage das Innenrohr (16) und die Rohrträgerplatte (12, 14) mit einem ersten Formschluss (F1), der radial sowie axial und jeweils gegeneinander gerichtet wirksam ist, zueinander festgelegt sind,
    • dass eine umlaufende Rundschweißnaht (36) orbital, von der plattenseitigen und rohrseitigen Innenbohrung (17, 16a) ausgehend, einlagig durchgängig von radial innen bis radial außen ausgeführt ist,

• dass eine Schweißnahtbreite (b) der umlaufenden Rundschweißnaht (36) mindestens eine axiale Formschlusstiefe (B1) des ersten Formschlusses (F1) erfasst und

• dass die umlaufende Rundschweißnaht (36) so positioniert ist, dass die Schweißnahtbreite (b) maximal um die axiale Formschlusstiefe (B1) in die Rohrträgerplatte (12, 14), von der Seite des Innenrohres (16) aus gesehen, eingreift.

11. Produkt-zu-Produkt-Rohrbündel-Wärmeaustauscher (100) mit wenigstens einem Rohrbündel nach einem der Ansprüche 8 bis 10.

**Claims**

1. A method for producing welded connections between inner tubes (16) and tube support plates (12, 14) of a tube bundle (10) for a product-to-product shell-and-tube heat exchanger (100) by means of an auxiliary device (50), wherein the relevant tube support plate (12, 14) is welded by its end face that faces the inner tubes (16), said method being carried out with the following steps (i) to (iii):

(i) orienting the inner tubes (16) with assigned plate inner bores (17) arranged in the tube support plate (12, 14) in such a way that the inner tubes (16) and the plate inner bores (17) are aligned with one another;

(ii) fixing the relevant inner tube (16) and the tube support plate (12, 14) to one another in an unwelded starting position by means of a form fit that is effective radially and in opposing directions,

wherein more than one plate inner bore (17) is defined and therefore a tube layout pattern (M) is established by means of the tube support plate (12, 14) for assigned inner tubes (16) arranged in parallel with one another;

(iii) immovably fixing a number (n) of inner tubes (16) required in each case to one another as a whole according to the tube layout pattern (M) and in the relevant form fit with the tube support plate (12, 14) by means of the auxiliary device (50),

**characterized by** the following additional steps (iv) to (viii):

(iv) pressing the end face of the tube support plate (12, 14) against the end face of the inner tubes (16) in the direction of the inner tube longitudinal axes (R) of the inner tubes (16) for the duration of the welding operations for all the inner tubes (16) with a first form fit (F1), which is effective both radially and axially and in each case in opposing directions,

wherein the plate inner bore (17) and a tube inner bore (16a) of the inner tube (16) have inner diameters (D) of equal size,

(v) immovably fixing the number (n) of inner tubes (16) required in each case to one another as a whole according to the tube layout pattern (M) by means of a second, detachable form fit (F2) of the auxiliary device (50),

(vi) making a circumferential round weld (36) orbitally, starting from the plate and the tube inner bore (17, 16a), in a single pass and continuously from radially inside to radially outside, wherein at least one axial form fit depth (B 1) of the first form fit (F 1) is covered by a weld width (b) of the circumferential round weld (36),

(vii) welding the inner tubes (16) to the tube support plate (12, 14) one after the other, and

(viii) detaching and removing the auxiliary device (50) from the welded tube arrangement.

2. The production method according to claim 1, **characterized in that** a welding sequence is provided such that, if present, initially an inner tube (16) arranged centrally in the tube support plate (12, 14) and subsequently the external inner tubes (16) arranged on a pitch circle (T) around the central inner tube (16) are welded to the tube support plate (12, 14), in each case in the opposite order.

3. An auxiliary device (50) for a method for producing welded connections between inner tubes (16) and tube support plates (12, 14) of a tube bundle (10) for a product-to-product shell-and-tube heat exchanger (100), wherein the welded connection is designed in a manner known per se such that

• the inner tube (16), with its tube inner bore (16a), is connected to an end face of the disk-shaped tube support plate (12, 14) that faces the inner tubes (16) in a plane perpendicular to an inner tube longitudinal axis (R), which tube support plate comprises a plate inner bore (17),

• the tube inner bore (16a) and the plate inner bore (17) have inner diameters (D) of equal size and are oriented so as to be aligned with one another,

• in an unwelded starting position, the inner tube (16) and the tube support plate (12, 14) are fixed to one another by means of a first form fit (F1), which is effective both radially and axially and in each case in opposing directions,

• a circumferential round weld (36) is made orbitally, starting from the plate and the tube inner bore (17, 16a), in a single pass and continuously from radially inside to radially outside, and

• a weld width (b) of the circumferential round weld (36) covers at least one axial form fit depth (B1) of the first form fit (F1),

**characterized in that**

• a first and a second holding ring half (50.1, 50.2) are provided, which form a closed ring,
• the holding ring halves (50.1, 50.2) touch in a parting plane (E) that extends through a center (Z) of the auxiliary device (50), and the holding ring halves (50.1, 50.2) form a non-displaceable second form fit (F2) in the parting plane (E),
• the tube support plate (12, 14) establishes a tube layout pattern (M) for the arrangement of inner tubes (16) arranged in parallel with one another by defining more than one provided plate inner bore (17),
• the tube layout pattern (M) is reproduced in the holding ring halves (50.1, 50.2) in such a way that inner tubes (16) arranged so as to be evenly distributed around a single pitch circle (T) are in each case enclosed at most by one half by the holding ring halves (50.1, 50.2), wherein the opening of the relevant enclosing contour faces the center (Z) of the holding ring halves (50.1, 50.2),
• the parting plane (E) additionally extends through at least one inner tube longitudinal axis (R) lying on the pitch circle (T),
• holding means (52) are provided, which engage displaceably in the holding ring halves (50.1, 50.2) in each case on the periphery of the holding ring halves (50.1, 50.2) and in a star shape oriented towards the center (Z),
• the holding means (52) are in each case tangent to adjacent inner tubes (16) arranged on the pitch circle (T), and
• if necessary, the holding means (52) fix an inner tube (16) arranged in the center (Z) by means of their relevant end face facing the center (Z) and are in each case detachably fixed in this position themselves.

4. The auxiliary device (50) according to claim 3,
**characterized in that**
the second form fit (F2) fixes the first and the second holding ring half (50.1, 50.2) to one another in the radial direction.

5. The auxiliary device (50) according to claim 3 or 4,
**characterized in that**
the holding means (52) are in each case immovably fixed in the assigned holding ring half (50.1, 50.2) by means of a securing means (54).

6. The auxiliary device (50) according to any one of claims 3 to 5,

**characterized in that**
the first and the second holding ring half (50.1, 50.2) are detachably interconnected by means of a connection means (56) arranged on the periphery of the first and the second holding ring half (50.1, 50.2), which are arranged diametrically to one another.

7. The auxiliary device (50) according to any one of claims 3 to 6,
**characterized in that**

• seven inner tubes (16) are provided, wherein one inner tube (16) is located coaxially in the center (Z) and six inner tubes (16) are arranged so as to be evenly distributed around the pitch circle (T), and
• the parting plane (E) additionally extends through two diametrically arranged inner tubes (16).

8. A tube bundle (10) for a product-to-product shell-and-tube heat exchanger (100), comprising inner tubes (16) and tube support plates (12, 14), said parts being welded using a method for producing welded connections between inner tubes (16) and tube support plates (12, 14) according to claim 1 or 2, **characterized in that** the welded connection is designed as a circumferential round weld (36) and the tube support plate (12, 14), radially spaced apart on the outside of the circumferential round weld (36), comprises a circumferential, axially extending plate cut-out (34) in the shape of an annular gap and designed such that the wall thickness of the tube support plate (12, 14) to be welded to the circumferential round weld (36) assumes a value that is between one and two tube wall thicknesses (d).

9. The tube bundle (10) according to claim 8,
**characterized in that**
the method for producing welded connections between inner tubes (16) and tube support plates (12, 14) can be carried out by means of an auxiliary device (50) according to any one of claims 3 to 7.

10. The tube bundle according to claim 8 or 9, comprising inner tubes (16) and tube support plates (12, 14) and comprising the welded connection between the inner tubes (16) and tube support plates (12, 14), wherein the welded connection is designed such that

• the inner tube (16), with its tube inner bore (16a), is connected to an end face of the disk-shaped tube support plate (12, 14) that faces the inner tubes (16) in a plane perpendicular to an inner tube longitudinal axis (R), which tube support plate comprises a plate inner bore (17),
• the tube inner bore (16a) and the plate inner bore (17) have inner diameters (D) of equal size and are oriented so as to be aligned with one another,

• in an unwelded starting position, the inner tube (16) and the tube support plate (12, 14) are fixed to one another by means of a first form fit (F1), which is effective both radially and axially and in each case in opposing directions,

• a circumferential round weld (36) is made orbitally, starting from the plate and tube inner bore (17, 16a), in a single pass and continuously from radially inside to radially outside,

• a weld width (b) of the circumferential round weld (36) covers at least one axial form fit depth (B1) of the first form fit (F1), and

• the circumferential round weld (36) is positioned such that the weld width (b) engages in the tube support plate (12, 14) at most by the axial form fit depth (B1), when viewed from the side of the inner tube (16).

11. A product-to-product shell-and-tube heat exchanger (100) comprising at least one tube bundle (10) according to any one of claims 8 to 10.

**Revendications**

1. Procédé de production de joints soudés entre des tubes internes (16) et des plaques porte-tube (12, 14) d'un faisceau tubulaire (10) pour un échangeur de chaleur à faisceau tubulaire de type produit à produit (100) au moyen d'un dispositif auxiliaire (50), dans lequel la plaque porte-tube (12, 14) respective est soudée avec son côté frontal tourné vers les tubes internes (16), mis en oeuvre à l'aide des étapes (i) à (iii) suivantes :

   (i) orientation des tubes internes (16) avec des alésages internes côté plaque (17) correspondants disposés dans la plaque porte-tube (12, 14), de telle façon que les tubes internes (16) et les alésages internes côté plaque (17) sont alignés entre eux ;

   (ii) fixation du tube interne (16) respectif et de la plaque porte-tube (12, 14) les uns par rapport aux autres dans une position initiale non soudée avec une complémentarité de forme active radialement et orientés les uns vers les autres, dans lequel plus d'un alésage interne côté plaque (17) est spécifié et un modèle de répartition de tubes (M) est ainsi défini par la plaque porte-tube (12, 14) pour des tubes internes (16) correspondants, disposés parallèlement les uns aux autres ;

   (iii) fixation inamovible du nombre respectivement requis (n) de tubes internes (16) en totalité en fonction du modèle de répartition de tubes (M) les uns par rapport aux autres et en complémentarité de forme respective avec la plaque porte-tube (12, 14) au moyen du dispositif auxiliaire (50),

**caractérisé par** les étapes supplémentaire (iv) à (viii) suivantes :

   (iv) pression du côté frontal de la plaque porte-tube (12, 14) dans la direction des axes longitudinaux de tube interne (R) des tubes internes (16) contre le côté frontal des tubes internes (16) pendant la durée des soudages pour tous les tubes internes (16) avec une première complémentarité de forme (F1) active radialement et axialement et respectivement orientés les uns vers les autres, dans lequel l'alésage interne côté plaque (17) et un alésage interne côté tube (16a) du tube interne (16) présentent des diamètres internes (D) de même taille,

   (v) fixation inamovible du nombre respectivement requis (n) de tubes internes (16) en totalité en fonction du modèle de répartition de tubes (M) les uns par rapport aux autres au moyen d'une deuxième complémentarité de forme (F2) du dispositif auxiliaire (50), laquelle est conçue détachable,

   (vi) réalisation d'une soudure circulaire circonférentielle (36) de façon orbitale, à partir de l'alésage interne côté plaque et côté tube (17, 16a), monocouche et en continu de l'intérieur radialement jusqu'à l'extérieur radialement, dans lequel au moins une profondeur de complémentarité de forme axiale (B1) de la première complémentarité de forme (F1) est détectée par une largeur de soudure (b) de la soudure circulaire circonférentielle (36),

   (vii) soudage des tubes internes (16) avec la plaque porte-tube (12, 14) les uns après les autres et

   (viii) détachement et retrait du dispositif auxiliaire (50) par rapport à l'agencement de tubes soudé.

2. Procédé de production selon la revendication 1, **caractérisé en ce que**

   une série de soudages est prévue de telle façon que tout d'abord un tube interne (16) disposé de façon centrale dans la plaque porte-tube (12, 14) et ensuite les tubes internes (16) situés à l'extérieur disposés sur un cercle partiel (T) autour du tube interne central (16) sont soudés avec la plaque porte-tube (12, 14), respectivement dans une série opposée.

3. Dispositif auxiliaire (50) pour un procédé de produc-

tion de joints soudés entre des tubes internes (16) et des plaques porte-tube (12, 14) d'un faisceau tubulaire (10) pour un échangeur de chaleur à faisceau tubulaire de type produit à produit (100), dans lequel les joints soudés sont conçus d'une manière connue en soi, de telle façon que

• le tube interne (16) est relié, avec son alésage interne côté tube (16a) dans un plan perpendiculaire à un axe longitudinal de tube interne (R), à un côté frontal tourné vers le tube interne (16) de la plaque porte-tube (12, 14) en forme de disque présentant un alésage interne côté plaque (17),

• l'alésage interne côté tube (16a) et l'alésage interne côté plaque (17) présentent des diamètres internes (D) de même taille et sont orientés en alignement l'un avec l'autre,

• dans une position initiale non soudée, le tube interne (16) et la plaque porte-tube (12, 14) sont fixés l'un par rapport à l'autre avec une première complémentarité de forme (F1) active radialement et axialement et respectivement orientés l'un vers l'autre,

• une soudure circulaire circonférentielle (36) est conçue de façon orbitale, à partir de l'alésage interne côté plaque et côté tube (17, 16a), monocouche et en continu de l'intérieur radialement jusqu'à l'extérieur radialement et

• la largeur de soudure (b) de la soudure circulaire circonférentielle (36) couvre au moins une profondeur de complémentarité de forme axiale (B1) de la première complémentarité de forme (F1),

**caractérisé en ce que**

• il est prévu une première et une deuxième moitié de bague de retenue (50.1, 50.2), lesquelles forment une bague fermée,

• les moitiés de bague de retenue (50.1, 50.2) se touchent dans un plan de séparation (E) passant par un centre (Z) du dispositif auxiliaire (50), et **en ce que** les moitiés de bague de retenue (50.1, 50.2) forment ensemble une deuxième complémentarité de forme indéplaçable (F2) dans le plan de séparation (E),

• la plaque porte-tube (12, 14) définit un modèle de répartition de tubes (M) par spécification de plus d'un alésage interne côté plaque (17) prévu pour l'agencement de tubes internes (16) disposés parallèlement les uns aux autres,

• le modèle de répartition de tubes (M) est représenté de telle façon dans les moitiés de bague de retenue (50.1, 50.2), que des tubes internes (16) disposés de façon homogène sur un seul cercle partiel (T) sont entourés respectivement au maximum sur un côté par les moitiés de bague de retenue (50.1, 50.2), dans lequel l'ouverture du contour de confinement respectif est tournée vers le centre (Z) des moitiés de bague de retenue (50.1, 50.2),

• le plan de séparation (E) passe en outre par au moins un axe longitudinal de tube interne (R) situé sur le cercle partiel (T),

• il est prévu des moyens de retenue (52), lesquels s'engagent de façon déplaçable dans les moitiés de bague de retenue (50.1, 50.2) respectivement sur la circonférence des moitiés de bague de retenue (50.1, 50.2) et en étant orientés en forme d'étoile vers le centre (Z),

• les moyens de retenue (52) sont respectivement tangents à des tubes internes (16) adjacents disposés sur le cercle partiel (T) et

• les moyens de retenue (52) fixent si nécessaire un tube interne (16) disposé au centre (Z) avec leur côté frontal respectif tourné vers le centre (Z) et sont eux-mêmes fixés dans cette position respectivement de façon détachable.

4. Dispositif auxiliaire (50) selon la revendication 3, **caractérisé en ce que**
la deuxième complémentarité de forme (F2) fixe la première et la deuxième moitié de bague de retenue (50.1, 50.2) l'une par rapport à l'autre dans la direction radiale.

5. Dispositif auxiliaire (50) selon la revendication 3 ou 4, **caractérisé en ce que**
les moyens de retenue (52) sont fixés respectivement de façon inamovible par un moyen de blocage (54) dans la moitié de bague de retenue (50.1, 50.2) correspondante.

6. Dispositif auxiliaire (50) selon l'une des revendications 3 à 5, **caractérisé en ce que**
la première et la deuxième moitié de bague de retenue (50.1, 50.2) sont reliées entre elles de façon détachable par un moyen de jonction (56) disposé sur la circonférence de la première et de la deuxième moitié de bague de retenue (50.1, 50.2), lesquels sont disposés de façon diamétrale l'un par rapport à l'autre.

7. Dispositif auxiliaire (50) selon l'une des revendications 3 à 6, **caractérisé en ce que**

• il est prévu sept tubes internes (16), dans lequel un tube interne (16) se situe au centre (Z) coaxialement et six tubes internes (16) sont disposés de façon homogène sur le cercle partiel (T) et

• le plan de séparation (E) passe en outre par deux tubes internes (16) disposés de façon diamétrale l'un par rapport à l'autre.

8. Faisceau tubulaire (10) pour un échangeur de chaleur à faisceau tubulaire de type produit à produit (100) avec des tubes internes (16) et des plaques porte-tube (12, 14), ces composants étant soudés à l'aide d'un procédé de production de joints soudés entre des tubes internes (16) et des plaques porte-tube (12, 14) selon la revendication 1 ou 2, **caractérisé en ce que**
le joint soudé est conçu comme une soudure circulaire circonférentielle (36) et la plaque porte-tube (12, 14), à distance radialement côté extérieur de la soudure circulaire circonférentielle (36), présente un évidement circonférentiel côté plaque (34) en forme de fente annulaire s'étendant axialement, lequel est conçu de telle façon que l'épaisseur de paroi de la plaque porte-tube (12, 14) destinée à être soudée à l'aide de la soudure circulaire circonférentielle (36) prend une valeur allant d'une simple à une double épaisseur de paroi de tube (d).

9. Faisceau tubulaire (10) selon la revendication 8, **caractérisé en ce que**
le procédé de production de joints soudés entre des tubes internes (16) et des plaques porte-tube (12, 14) peut être mis en oeuvre à l'aide d'un dispositif auxiliaire (50) selon l'une des revendications 3 à 7.

10. Faisceau tubulaire (10) selon la revendication 8 ou 9, comprenant des tubes internes (16) et des plaques porte-tube (12, 14) et comprenant le joint soudé entre les tubes internes (16) et les plaques porte-tube (12, 14), dans lequel le joint soudé est conçu de telle façon que

- le tube interne (16) est relié, avec son alésage interne côté tube (16a) dans un plan perpendiculaire à un axe longitudinal de tube interne (R), à un côté frontal tourné vers le tube interne (16) de la plaque porte-tube (12, 14) en forme de disque présentant un alésage interne côté plaque (17),
- l'alésage interne côté tube (16a) et l'alésage interne côté plaque (17) présentent des diamètres internes (D) de même taille et sont orientés en alignement l'un avec l'autre,
- dans une position initiale non soudée, le tube interne (16) et la plaque porte-tube (12, 14) sont fixés l'un par rapport à l'autre avec une première complémentarité de forme (F 1) active radialement et axialement et respectivement orientés l'un vers l'autre,
- une soudure circulaire circonférentielle (36) est conçue de façon orbitale, à partir de l'alésage interne côté plaque et côté tube (17, 16a), monocouche en continu de l'intérieur radialement jusqu'à l'extérieur radialement,

- une largeur de soudure (b) de la soudure circulaire circonférentielle (36) couvre au moins une profondeur de complémentarité de forme axiale (B1) de la première complémentarité de forme (F1) et
- la soudure circulaire circonférentielle (36) est positionnée de telle façon que la largeur de soudure (b) s'engage dans la plaque porte-tube (12, 14) au maximum selon la profondeur axiale de la complémentarité de forme (B1), vue depuis le côté du tube interne (16).

11. Échangeur de chaleur à faisceau tubulaire de type produit à produit (100) comprenant au moins un faisceau tubulaire selon l'une des revendications 8 à 10.

**100**

**15**

**10**

**16**

**5**

## Figur 1
(Stand der Technik)

## Figur 2a

**14**

**16**

**12**

**10**

**S**

**S**

**12**

**10**

**16**

## Figur 2b
(Stand der Technk)

**14**

**Figur 3**

(Stand der Technik)

EP 4 117 849 B1

**Figur 4**
(Stand der Technik)

**Figur 4b**
(Stand der Technik)

**Figur 4a**
(Stand der Technik)

**Figur 5**

**Figur 6**
(Stand der Technik)

12,14

C-C
Figur 7b

12,14

17

26

A,Z

34

T

C-C
Figur 7a

17

M

A,Z

12,14

C

C

Figur 7

**50**

50.1

50.2a

50.1a

E

54 54 54 54 54

52 52 52 52 52 52

56

50.2

**Figur 8**

**Figur 9**

**50**

52 52

50.1

54 54

PR

16 16

52

16 16 54

16 F2

"G" 16 E

PR 16 16 54

16 56

52 52

50.2

"G"
Figur 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2020117121 B
- DE 2341808 A1
- US 2996600 A
- FR 2349395 A
- WO 2014060425 A1
- US 2015267973 A1
- DE 1501463 A
- DE 9403913 U1